# EUROPÄISCHE PATENTSCHRIFT

(11) **EP 3 017 342 B1**
(45) Veröffentlichungstag und Bekanntmachung des Hinweises auf die Patenterteilung: **30.10.2019**
(21) Anmeldenummer: 14736384.0
(22) Anmeldetag: 03.07.2014
(51) Int. Cl.: G05B 19/042, G01F 23/00, H04L 29/08

(54) **ÜBERTRAGUNGSVORRICHTUNG FÜR EIN MESSGERÄT UND VERFAHREN ZUM ÜBERTRAGEN VON ROHDATEN MIT EINER ÜBERTRAGUNGSVORRICHTUNG**
TRANSFER DEVICE FOR A MEASUREMENT DEVICE AND A METHOD FOR TRANSFERRING RAW DATA USING A TRANSFER DEVICE
DISPOSITIF DE TRANSMISSION POUR APPAREIL DE MESURE ET PROCÉDÉ DE TRANSMISSION DE DONNÉES BRUTES AU MOYEN D'UN DISPOSITIF DE TRANSMISSION

(30) Priorität: 03.07.2013 DE 102013213040
(43) Veröffentlichungstag der Anmeldung: 11.05.2016
(73) Patentinhaber: VEGA Grieshaber KG, 77709 Wolfach (DE)
(72) Erfinder: ALLGAIER, Volker, 77716 Haslach i.K. (DE); STAIGER, Holger, 78739 Hardt (DE)
(74) Vertreter: Maiwald Patent- und Rechtsanwaltsgesellschaft mbH
(86) Internationale Anmeldenummer: PCT/EP2014/064265
(87) Internationale Veröffentlichungsnummer: WO 2015/001064

(56) Entgegenhaltungen:
- EP-A2- 2 490 088
- DE-A1-102010 044 182
- US-A1- 2009 265 583

## Beschreibung

### Technisches Gebiet der Erfindung

Die Erfindung betrifft die Messtechnik. Insbesondere betrifft die Erfindung eine Übertragungsvorrichtung für ein Messgerät, ein Verfahren zum Übertragen von Rohmessdaten mit einer Übertragungsvorrichtung, eine Auswertevorrichtung, ein Messsystem und ein Programmelement zum Übertragen von Rohmessdaten.

### Hintergrund der Erfindung

Marktübliche Sensorik im Bereich der Füllstandmesstechnik berechnet Messergebnisse direkt vor Ort, d.h. in dem Messgerät selbst. Für die Berechnung dieser Zielmesswerte, also der tatsächlich interessierenden Messergebnisse, ist oftmals ein kleines Mikrocontrollersystem mit begrenzten Energiebedarf und mit begrenzter Rechenmöglichkeiten in dem Messgerät vorgesehen. Da bei Messsystemen, welche mit Radartechnologien oder anderen Funktechnologien arbeiten, die Ermittlung der Zielmesswerte in der Regel mit dem Erfassen einer sog. Echokurve verbunden ist, und diese Echokurve ggf. viele wertdiskrete und zeitdiskrete Datenpunkte oder Stützwerte aufweist, kann für die Berechnung oftmals ein hoher Rechenaufwand nötig sein. Ein hoher Rechenaufwand mag entstehen, da die Echokurven mit entsprechend komplexen Algorithmen verarbeitet werden müssen, um zu den Zielmesswerten zu gelangen. Dieser hohe Rechenaufwand führt zu einer begrenzten Anzahl an Berechnungen pro Sekunde und zu einem sehr statischen Verhalten des Messgerätes was besonders Anwendungsfälle mit besonderen Merkmalen in der Echokurve angeht. Hier wird oft vor Ort eine entsprechende Parametrierung eingesetzt, d.h. eine Einstellung von Parametern, ein Setzen von Parametern (setting parameter) oder ein Anpassen von Parametern (parameter adjustment), damit das Messgerät in der Lage ist, bei den gegebenen Sachverhalten angemessen zu funktionieren.

Die Druckschrift US 2011/0268273 beschreibt eine Datenverarbeitungsvorrichtung für ein Feldgerät bei der berechnete tatsächlich interessierende Messergebnisse verschlüsselt weiter gegeben werden.

Die Druckschrift EP 2 490 088 A2 beschreibt ein Feldgerät, welches einen PID Block aufweist, der über einen AI Block eine Prozessvariable von einem Sensor empfängt, eine Steuerausgabe berechnet und die Steuerausgabe über einen AO Block an einen Aktuator ausgibt.

Die Druckschrift US 2009/0265583 A1 betrifft eine Überwachungsvorrichtung mit mehreren Datenpfaden, insbesondere mit einem Steuerdaten-Netzwerk mit geringer Bandbreite, und einem Rohdaten-Netzwerk mit höherer Bandbreite.

DE 10 2010 044 182 A1 beschreibt ein Verfahren zum Einstellen eines Messgeräts entsprechend eines Parametersatzes, der eine optimierte Eistellung des Messgeräts in Abhängigkeit von definierten Prozessbedingungen wiedergibt.

Der Aufsatz "Verarbeitung gas-chromatischer Daten durch moderne elektronische Integratoren in Verbindung mit kleinen Rechensystemen" von Bischet, G, und Knechtel, G. aus Chromatographia 1972, Volume 5, Issue 2 - 3, Seiten 166 - 172, beschreibt ein Integrator-Minicomputer-System INFOCALC W, welches die Identifikation einzelner Komponenten leistet und ein komplettes Analysenprotokoll in Klarschrift zur Verfügung stellt.

### Zusammenfassung der Erfindung

Es mag ein Bedarf bestehen ein effizienteres Auswerten von Messwerten zu ermöglichen.

Dementsprechend werden ein Verfahren zum Übertragen von Rohmessdaten, eine Auswertevorrichtung, ein Messsystem und ein Programmelement angegeben.

Der Schutzbereich der Erfindung ist in den unabhängigen Patentansprüchen wiedergegeben. Fortbildungen der Erfindung sind in den abhängigen Patentansprüchen angegeben.

Gemäß einem Aspekt der vorliegenden Erfindung wird ein Messystem mit einer Übertragungsvorrichtung für ein Messgerät beschrieben. Die Übertragungsvorrichtung weist eine Rohdatenschnittstelle oder Rohmessdatenschnittstelle zum direkten Zugriff auf Rohmessdaten des Messgeräts und eine Kennzeichnungseinrichtung zum Kennzeichnen der Rohmessdaten mit einer Messgerätekennung auf. Darüber hinaus weist die Übertragungsvorrichtung eine Versendeeinrichtung auf, zum Versenden der gekennzeichneten Rohdaten oder Rohmessdaten an eine externe Auswertevorrichtung, wobei die externe Auswertevorrichtung extern von dem Messgerät und/oder extern von der Versendeeinrichtung angeordnet ist. Die Messgerätekennung erlaubt es der externen Auswertevorrichtung, die Rohmessdaten dem Messgerät und/oder der Übertragungsvorrichtung zuzuordnen, von dem/der sie erzeugt und versendet wurden. Die Rohmessdaten werden im Wesentlichen unverändert versendet. Folglich werden die Rohmessdaten versendet, wie sie an der Rohdatenschnittstelle empfangen wurden. Das Versenden der Rohmessdaten mag den Rechenaufwand vor Ort reduzieren und zum Reduzieren des Energiebedarfs im Messgerät führen.

Das Kennzeichnen der Rohmessdaten mag es ermöglichen, dass extern berechnete Messwerte wieder an die Übertragungsvorrichtung und insbesondere an das Messgerät von der Auswertevorrichtung zurückgeschickt werden können. Zum Empfangen mag in einem Beispiel die Übertragungsvorrichtung eine Kennzeichenerkenneinrichtung oder eine Adressauswerteeinrichtung aufweisen, die eingerichtet ist, eine ihr zugeordnete Messgerätekennung in empfangenen Daten zu erkennen und die mit dieser Messgerätekennnung empfangenen Daten weiterzuverarbeiten oder anzuzeigen. Bei der Messgerätekennung für die empfangenen Daten, die von der externen Auswertevorrichtung zurückgeschickt werden, kann es sich um die selbe Kennung handeln, mit der die Daten verschickt worden sind, beispielsweise eine Sendeadresse, oder um eine andere Kennung, beispielsweise eine Empfangsadresse.

Gemäß einem anderen Aspekt der vorliegenden Erfindung wird eine Übertragungsvorrichtung für ein Messgerät bereitgestellt, die eine Rohdatenschnittstelle zum direkten Zugriff auf Rohmessdaten des Messgeräts, eine Kennzeichnungseinrichtung zum Kennzeichnen der Rohmessdaten mit einer Messgerätekennung und eine Versendeeinrichtung zum Versenden der gekennzeichneten Rohmessdaten an eine externe Auswertevorrichtung aufweist. Die externe Auswertevorrichtung ist extern von dem Messgerät und/oder extern von der Versendeeinrichtung angeordnet und die Messgerätekennung erlaubt es der externen Auswertevorrichtung, die Rohmessdaten dem Messgerät und/oder der Übertragungsvorrichtung zuzuordnen, d.h zu erkennen, dass die Rohdaten von einem bestimmten Messgerät und/oder von einer bestimmten Übertragungsvorrichtung stammt. Die Rohmessdaten werden unverändert versandt und die Rohdatenschnittstelle ist zum Überbrücken einer in dem Messgerät vorhandenen Auswertevorrichtung eingerichtet. In einem Beispiel mag eine in dem Messgerät oder in dem Feldgerät vorhandene interne Auswertevorrichtung und/oder eine interne Berechnungseinrichtung überbrückt oder außer Funktion gesetzt werden, sobald die Übertragungsvorrichtung mit dem Messgerät verbunden ist.

In anderen Worten, mag die Rohdatenschnittstelle oder die Rohmessdatenschnittstelle der Übertragungsvorrichtung so beschaffen sein, dass sie eine ggf. in dem Messgerät vorhandene Berechnungseinrichtung überbrückt oder ausschaltet, so dass innerhalb des Messgeräts die Rohmessdaten nicht weiterverarbeitet werden, sondern unverändert an die Übertragungsvorrichtung weitergereicht werden, also im Wesentlichen so, wie sie von dem Messgerät selbst beispielsweise von einem Sensor empfangen worden sind. Um zu ermöglichen, dass das Messgerät erkennt, dass eine Übertragungsvorrichtung an ihm angeschlossen ist, mag die Rohdatenschnittstelle der Übertragungsvorrichtung einen Stecker aufweisen, der eine Pincodierung hat, die von einem mit einer entsprechend pincodierten Buchse ausgestatteten Messgerät erkannt werden kann. Die Rohmessdatenschnittstelle der Übertragungsvorrichtung mag beispielsweise mit einer Rohmessdatenschnittstelle des Messgeräts gekoppelt werden. Alternativ mag die Rohmessdatenschnittstelle beim Verbinden mit der Rohmessdatenschnittstelle des Messgeräts einen Schalter betätigen, der ein Signal auslöst, das dem Messgerät signalisiert, eine möglicherweise vorhandene Berechnungseinrichtung oder interne Auswertevorrichtung nicht zu nutzen indem er sie abschaltet und die Rohmessdaten direkt an die Übertragungsvorrichtung weiterzuleiten.

Gemäß einem weiteren Aspekt der vorliegenden Erfindung wird ein Verfahren zum Übertragen von Rohmessdaten mittels einer Übertragungsvorrichtung beschrieben. Das Verfahren weist den Verfahrensschritt des Zugreifens auf die Rohmessdaten eines Messgeräts mittels direkten Zugriffs auf. Darüberhinaus weist das Verfahren das Kennzeichnen der Rohmessdaten mit einer Messgerätekennung und das Versenden der gekennzeichneten Rohmessdaten an eine externe Auswertevorrichtung auf. Die externe Auswertevorrichtung ist extern von dem Messgerät oder extern von der Versendeeinrichtung angeordnet. Außerdem erlaubt es die Messgerätekennung der externen Auswertevorrichtung, die Rohmessdaten dem Messgerät oder der Versendeeinrichtung zuzuordnen, von dem/der sie erzeugt worden sind. Die Rohmessdaten werden im Wesentlichen unverändert versendet. Das unveränderte Versenden von Rohmessdaten mag bedeuten, dass die Rohmessdaten im Wesentlichen so versendet werden, wie sie von dem Messgerät bereitgestellt werden oder so, wie sie das Messgerät selbst empfangen hat, so dass für einen Empfänger der Rohmessdaten ein direkter Zugriff auf die Rohmessdaten simuliert wird. Lediglich zur Übertragung notwendige Maßnahmen, wie beispielsweise das Versehen mit einem Übertragungsheader oder das Zerlegen der Rohmessdaten in kleine übertragbare Pakete, mag durchgeführt werden.

Änderungen, die die Rohmessdaten betreffen, wie beispielsweise Änderungen des Formats der Rohmessdaten oder auch Änderungen der Reihenfolge der Rohmessdaten, mögen dabei im Wesentlichen nicht durchgeführt werden, so dass die Rohmessdaten erhalten bleiben, wie sie vom Messgerät oder Sensor empfangen worden sind. In einem Beispiel mögen nicht nur die Rohmessdaten, insbesondere die Messwerte, unverändert versendet werden, sondern auch oder zusätzlich mögen Indizes unverändert weitergegeben werden, die beispielsweise genutzt werden, um die Rohmessdaten entweder einem Betreiber oder einem Endkunden zuzuordnen. In einem anderen Beispiel werden auch Indizes unverändert weitergegeben, die genutzt werden, um die Reihenfolge der Rohmessdaten zu kontrollieren. Folglich werden sämtliche Daten, Rohmessdaten, Sortierparameter oder Indizes erhalten bleiben, so, wie sie von dem Messgerät oder Sensor empfangen worden sind. Veränderungen an den Rohmessdaten mögen im Wesentlichen nur außerhalb des Messgeräts durchgeführt werden. Insbesondere mag innerhalb der Übertragungsvorrichtung keine weitere Auswertung, Berechnung oder Verarbeitung der Rohmessdaten erfolgen, wie beispielsweise das Ermitteln eines Füllstands oder eines Zielmesswertes. Das Verfahren kann auch das Empfangen eines berechneten Messwerts und das Bereitstellen dieses berechneten Messwerts aufweisen. Dieser berechnete Messwert mag von der externen Auswertevorrichtung berechnet worden sein.

Zusammenfassend mag die Erfindung vorsehen, Rohdaten oder Rohmessdaten, insbesondere Sensorrohdaten oder physikalische Messwerte, über ein Kommunikationsnetzwerk mittels einer Versendeeinrichtung zu einem Zentralrechnersystem zu übertragen, wo die weitere Verarbeitung und Auswertung der Rohdaten stattfindet.

Der Zugriff auf die Rohdaten mag in einem Beispiel über eine Schnittstelle erfolgen, an der die Rohmessdaten, insbesondere eine Echokurve, ausgelesen werden können/kann. Da es sich bei den Rohdaten im Wesentlichen um physikalische Messwerte handelt, mögen die Rohmessdaten an einer Hardwareschnittstelle abgegriffen werden. In einem Beispiel mag eine Schnittstelle, über die Rohdaten oder Rohmessdaten bereitgestellt werden können, zumindest eine Schnittstelle sein, welche aus einer Gruppe von Schnittstellen ausgewählt ist, wobei die Gruppe aus einer parallelen Schnittstelle, einer seriellen Schnittstelle, einer drahtlosen Schnittstelle (Wireless), einer drahtgebundenen Schnittstelle und einer Funkschnittstelle besteht. Beispiele für eine serielle Schnittstelle sind eine RS232 Schnittstelle, eine USB Schnittstelle, eine Modbus/RS485 Schnittstelle, eine I²C Schnittstelle oder eine SPI (Serial Peripheral Interface). Als Beispiele für parallele Schnittstellen kann ein 8-Bit-Parallel-Port, ein 16-Bit-Parallel-Port, ein 32-Bit-Parallel-Port oder ein 64-Bit-Parallel-Port angeführt werden. Eine Funkschnittstelle kann als eine WLAN (Wireless Local Area Network), eine Bluetooth Schnittstelle, eine ZigBee Schnittstelle, eine ANT+ Schnittstelle oder eine andere Schnittstelle sein, die das ISM -Band (Industrial, Scientific, Medical Band) nutzt.

Die Begriffe "Rohdaten" und "Rohmessdaten" mögen gleichwertig verstanden werden und im Wesentlichen unveränderte Daten bezeichnen.

Gemäß einem weiteren Aspekt der vorliegenden Erfindung wird eine Auswertevorrichtung bereitgestellt, welche eine Empfangseinrichtung zum Empfangen von mit einer Messgerätekennung gekennzeichneten Rohmessdaten aufweist. Die Rohmessdaten mag die Auswertevorrichtung von einer Übertragungsvorrichtung empfangen. Außerdem weist die Auswertevorrichtung eine Verwaltungseinrichtung zum Verwalten von zumindest einem Messgerät, eine Zuordeneinrichtung zum Zuordnen der empfangenen Rohmessdaten zu einem des zumindest einem verwalteten Messgeräte auf. Darüber hinaus weist die Auswertevorrichtung eine Berechnungseinrichtung zum Berechnen eines Messwerts aus den Rohdaten oder eine Verarbeitungseinrichtung zum Verarbeiten der Rohmessdaten auf. Dieser berechnete Messwert mag der interessierende Messwert oder der Zielmesswert sein. Mittels einer Bereitstelleinrichtung kann die Auswertevorrichtung den berechneten Messwert oder den Zielmesswert bereitstellen, beispielsweise an einem Display oder an eine Übertragungseinrichtung. Hierzu mag die Bereitstelleinrichtung eine Echokurve auswerten.

Gemäß einem weiteren Aspekt der vorliegenden Erfindung wird ein Messsystem beschrieben, welches ein Messgerät, eine erfindungsgemäße Übertragungsvorrichtung, ein Kommunikationsnetzwerk und eine erfindungsgemäße Auswertevorrichtung aufweist. Das Messgerät ist über eine Datenschnittstelle mit der Übertragungsvorrichtung derart verbunden, dass die Übertragungsvorrichtung direkt auf die Rohmessdaten des Messgeräts zugreifen kann, welche von dem Messgerät oder Sensor erzeugt werden. Die Auswertevorrichtung ist extern zu dem Messgerät und/oder extern zu der Übertragungsvorrichtung mittels eines Kommunikationsnetzwerks mit dem Messgerät und/oder mit der Übertragungsvorrichtung verbunden. Das Kommunikationsnetzwerk mag dem Versenden der Messdaten dienen. Ebenso mögen über das Kommunikationsnetz berechnete Daten verschickt werden. Die Übertragungsvorrichtung ist mittels einer Versendeeinrichtung mit dem Kommunikationsnetzwerk verbunden, so dass die Übertragungsvorrichtung die Rohmessdaten im Wesentlichen unverändert über das Kommunikationsnetzwerk an die Auswertevorrichtung versenden kann.

Gemäß einem anderen Aspekt der vorliegenden Erfindung wird ein Programmelement zum Übertragen von Messdaten beschrieben, das, wenn es von einem Prozessor ausgeführt wird, das erfindungsgemäße Verfahren ausführt.

Gemäß einem anderen Aspekt der vorliegenden Erfindung wird ein computerlesbares Speichermedium bereitgestellt, welches einen Programmcode enthält, der, wenn er auf einem Prozessor ausgeführt wird, das erfindungsgemäße Verfahren zum Übertragen von Rohmessdaten ausführt.

Ein computerlesbares Speichermedium mag eine Floppy Disk oder Festplatte, ein USB Speichermedium (Universal Serial Bus), ein RAM (Random Access Memory), ein ROM (Read Only Memory), ein EPROM (Erasable Programmable Read Only Memory), ein EEPROM (Electronic Erasable Programmable Read Only Memory), ein Flash-Speicher oder ein FRAM (Ferromagnetic Random Access Memory) sein. Ein computerlesbares Speichermedium kann aber auch ein Datennetz sein, beispielsweise das Internet, welches es zulässt, einen Programmcode herunterzuladen. Ferner kann es sich sowohl bei dem Programmelement als auch dem Programmcode um einen Softwarepatch handeln.

I²C, I2C oder IIC (Inter Integrated Circuit) mag ein serieller Bus für Computersysteme sein. Er mag benutzt werden, um Geräte mit geringer Übertragungsgeschwindigkeit an einem Embedded System oder eine Hauptplatine anzuschließen. Die I2C Schnittstelle mag aber auch für den Zugriff auf Rohdaten genutzt werden. Die I2C Schnittstelle ist eine Hardwareschnittstelle.

Das HART® Protokoll (Highway Addressable Remote Transducer) kann insbesondere als ein offenes Master-Slave-Protokoll für Bus-adressierbare Feldgeräte bezeichnet werden. Es kann eine Methode implementieren, Daten mittels Frequency Shift Keying (FSK), aufgesetzt auf dem 4 bis 20mA Prozesssignal, zu übertragen, um Fernkonfiguration und Diagnoseprüfung zu ermöglichen. Das HART® Protokoll oder eine HART® Schnittstelle kann auch genutzt werden, um Rohdaten zu übertragen. Die 4 bis 20 mA Schnittstelle bzw. Die HART® Schnittstelle ist eine Hardwareschnittstelle, wobei die 4 bis 20mA-Schnittstelle eine analoge Schnittstelle ist, die durch das Anwenden des HART®-Protokolls und dessen physikalische Komponenten oder Hardware befähigt wird digitale Daten zu übertragen.

Sowohl I2C als auch HART® mögen sich als Protokoll zur Kommunikation mit einem Feldgerät oder Messgerät eignen, z. B. mit einem Auswertegerät, mit einem Füllstandmessgerät oder mit einem Druckmessgerät.

Ein Messgerät oder Feldgerät im Sinne dieser Anmeldung mag beispielsweise ein Füllstandmessgerät, ein Grenzstandmessgerät, ein Druckmessgerät, ein Durchflussmessgerät, ein Pulsmessgerät, ein Frequenzmessgerät oder eine Temperaturmessvorrichtung sein. Zur Erfassung der Rohdaten mögen unterschiedliche physikalische Effekte genutzt werden. Die Messwerterfassung kann mit Hilfe von Radarstrahlen, von Ultraschall, von Vibration, mit Hilfe einer geführten Mikrowelle (TDR, Time Domain Reflection), einer radioaktiven Strahlung oder unter Ausnutzung von kapazitiven Effekten erfolgen. Mittels dieser Messwerterfassung werden die Rohdaten oder eine Echokurve, insbesondere die Rohdaten einer Echokurve ermittelt. Die Messwerte können im Wesentlichen direkt an dem Messgerät oder Sensor abgegriffen werden. Zum Abgreifen mag das Messgerät eine Rohdatenschnittstelle aufweisen. Rohdaten können in unterschiedlichen Formaten vorliegen, weisen jedoch meist direkt messbare physikalische Größen oder Einheiten, wie eine Spannung, eine Temperatur, einen Pegel, eine Anzahl oder eine Kapazität auf. In einem Beispiel kann es sich bei Rohmessdaten um eine geordnete Tabelle oder Liste handeln, in der durch einen Ordnungsparameter eine Reihenfolge der Rohdaten vorgegeben wird. Eine solche geordnete Liste mag einen Verlauf oder eine Kurve darstellen und eine Vielzahl von Werten aufweisen. Bei einer geordneten Liste kann es sich um eine beliebig dimensionale Liste handeln, beispielsweise um eine zwei dimensionale oder eine dreidimensionale Liste, wobei die Dimension einer solchen Liste durch die Anzahl der Spalten bestimmt sein kann. Ein Beispiel für eine geordnete Liste, bei der die Zeit, zu der die Messung erfolgt, als Ordnungsparameter genutzt wird, mag ein Verlauf einer Spannung (in V) über der Zeit, ein Verlauf eines Pegels (in dB, dBm oder dBµV) über der Zeit, ein Verlauf einer Länge über der Zeit (in m) oder der Verlauf eines Pulses über der Zeit sein. In solch einem Verlauf einer physikalischen Größe mag einem Zeitpunkt ein entsprechender physikalischer Messwert zu diesem Zeitpunkt zugeordnet sein. Ein anderes Beispiel für einen Ordnungsparameter kann die Temperatur sein, beispielsweise in einem Verlauf einer Kapazität (in F) über eine Temperatur (in °C).

Rohdaten können beispielsweise von einer elektronischen Hardware wie einem IC oder einem A/D Wandler stammen, welches/welcher physikalische Größen in digitale Werte, die beispielsweise, auch in einem zeitlichen Zusammenhang stehen, wandelt und an einer Schnittstelle zur Verfügung stellt. Diese Werte werden dann von einer Berechnungseinheit oder von einer internen Auswertevorrichtung aufgenommen. Die Berechnungseinheit würde diese Daten in einen nutzbaren Messwert oder Zielmesswert, wie z. B. eine Füllhöhe umrechnen, welcher sich dann in beispielsweise 1,2 oder 4 Byte darstellen ließe. In anderen Worten mag sich eine Datenmenge, die die Rohdaten darstellt, von der Datenmenge die die Zielmesswerte darstellt unterscheiden. Die Rohdaten mögen zu einem Zielmesswert zusammengefasst werden. Daher mag die Datenmenge der Rohdaten größer als die Datenmenge des Zielmesswerts sein. Beispielsweise mag die zu einem Zielmesswert, wie beispielsweise dem Füllstand, gehörende Datenmenge der Rohdaten als ein Array oder eine Vielzahl von Bytes dargestellt werden, während der Zielmesswert eine kleinere Vielzahl von Bytes aufweisen mag. In einem Beispiel mögen die Rohdaten als 32 Byte Worte darstellbar sein, während der Zielmesswert 4 Bytes aufweist. Ein Rohmesswert, beispielsweise eine Echokurve, mag einen größeren Speicherbedarf als der Zielmesswert haben.

In einem anderen Beispiel können die Rohdaten, welche aus beispielsweise 1000 Messungen stammen mögen und in einer Liste zusammengeführt werden können, von einer Übertragungsvorrichtung aufgenommen und übertragen werden, im Wesentlichen ohne eine interne Auswertevorrichtung zu nutzen. Diese Daten enthalten somit zeitdiskrete und/oder wertdiskrete Informationen und werden im Messgerät nicht zu einer einzelnen Messinformation ausgewertet oder zusammengefasst werden, sondern werden erst an ein zentrales Rechensystem oder an eine externe Auswertevorrichtung durch die Übertragungseinheit übermittelt.

Ein Beispiel für eine Form, in der physikalische Messwerte bei dem Einsatz eines Reflexionsverfahren bereitgestellt werden, ist eine Echokurve. Eine Echokurve ist ein Verlauf einer Spannung über der Zeit, wobei die Spannung von einem Empfangsimpuls erzeugt wird.

Eine Echokurve kann beispielsweise aus mehreren hunderten Bytes bestehen, aus welchen man ohne notwendige tiefere Erkenntnisse, beispielsweise durch eine Verarbeitung oder Berechnung, im Wesentlichen keine Rückschlüsse auf den gewollten Messwert oder Zielmesswert erkennen kann. Erst durch die Aufbereitung oder Verarbeitung der Echokurve, beispielsweise durch die Auswertevorrichtung, kann der Zielmesswert abgeleitet werden. Ein Nutzer kann aus dem Zielmesswert einen Zustand eines Systems, beispielsweise einen Füllstand, leicht ableiten, während dieser aus den Rohdaten nicht ohne weiteres ableitbar ist. Der Zielmesswert mag eine Kompression oder Agglomeration einer Vielzahl von Rohmesswerten sein und somit leichter als die Rohdaten handhabbar sein. Beispielsweise mag der Speicherbereich, die Registergröße oder Busbreite, die für die Verarbeitung von Rohdaten nötig ist, größer sein, als diejenige, welche für die zugehörigen Zielmesswerte nötig ist. Die Aufbereitung einer Echokurve, um zu einem komprimierten Zielmesswert zu gelangen, kann verschiedene Operationen aufweisen, zum Beispiel Filterungen, Glättungen, Linearisierungen, Störbeseitigungen etc.

Die Echokurve mag eine Vielzahl von Bytes aufweisen, welche für einen Anwender nur von begrenztem Interesse sind. Aus solch einer Echokurve kann per Messwertgewinnung, beispielsweise in einer internen Auswertevorrichtung und/oder in einem Unterprogramm eines Messgerätebetriebssystems, der endgültige Messwert oder Zielmesswert bestimmt werden, welcher nur noch wenige Bytes aufweist. Die Reduktion der Vielzahl von Bytes auf eine kleinere Vielzahl von wenigen Bytes mag als Komprimierung oder Agglomeration der Rohmesswerte bezeichnet werden. Ein solcher verarbeiteter und komprimierter Zielmesswert mag für einen Anwender leicht zu verstehen sein. Es erfolgt also nicht nur eine Verkleinerung der Datenmenge, d.h. eine Agglomeration, sondern auch eine Vereinfachung der Daten.

Der Informationsgehalt pro Bit mag bei einem Zielmesswert höher sein als bei den Rohmessdaten. Rohdaten sind wegen ihrer großen Anzahl sehr komplex und daher für einen Nutzer schwer zu verstehen, Zielmesswerte sind wegen ihrer geringeren Datenmenge leicht verständlich. Der Zielmesswert für einen Füllstand mag ein einziger Wert sein, während die Rohdaten, aus denen dieser abgeleitet wurde, eine Vielzahl von Werte aufweist. In anderen Worten mag eine Vielzahl von Rohdaten auf einen einzigen Zielmesswert abgebildet werden. Diese Abbildung mag jedoch nicht umkehrbar sein, so dass nicht von einem Zielmesswert auf die zugehörigen Rohdaten geschlossen werden kann.

Rohdaten können auch Vorzeichen enthalten, die oftmals in einer nachgelagerten Messwertverarbeitung oder Auswertevorrichtung ausgewertet werden und dann in den verarbeiteten Daten nicht mehr vorhanden sind.

Rohdaten können Kapazitätswerte, Frequenzen oder eine Pulsanzahl sein, die erst in einer besonders dafür eingerichteten Auswertevorrichtung in Zielgrößen oder Zielmesswerte, wie den Füllstand oder eine Steilheit einer Kurve, gewandelt werden oder auch in eine Aussage, ob ein Maximum oder ein Minimum einer Kurve an einer bestimmten Stelle vorliegt.

Die Rohdaten einer Echokurve mögen direkt an einem Ausgang eines Analog/Digitalwandlers, insbesondere an dem Digitalausgang des Analog/Digitalwandlers, zur Verfügung gestellt werden, bevor die Rohdaten mittels eines Prozessors oder einer Signalverarbeitung in eine andere Form der Messdaten konvertiert werden, beispielsweise in einen ausgewerteten Messwert oder Zielmesswert. Beispielsweise mögen die Rohdaten einer Echokurve die Stützstellen einer diskreten Echokurve sein. Rohdaten können in einem anderen Beispiel auch in der Form einer Kurve, Tabelle oder eines Diagramms angegeben werden. Sie können aus einer oder mehreren Dimensionen bestehen. Auch eine zeitliche Abfolge von Rohdaten bzw. Echokurven kann für eine Berechnung von Zielmessdaten oder von Zielmesswerten relevant sein. Zielmessdaten oder Zielmesswerte werden dann aus verschiedenen Zusammenhängen oder Relationen innerhalb der Rohdaten berechnet. Diese können beispielsweise aufgrund des Vorzeichens, der Steilheit, des absoluten Pegels oder eines oder mehreren Offsets berechnet werden. Eine Echokurve kann als eine zweidimensionale Tabelle dargestellt werden, welche zwei Spalten aufweist, wobei eine Spalte einen Zeitwert und die andere Spalte einen Spannungswert aufweist, der zu einem dem Zeitwert entsprechenden Zeitpunkt an dem Messgerät oder Sensor gemessen wurde.

Als Messgerät oder Feldgerät mag im Allgemeinen eine Kombination aus einem Sensor und einer Messwertverarbeitungseinrichtung bezeichnet werden, die meist in einem Gehäuse untergebracht sind. Da jedoch die Messwertverarbeitung gemäß der Erfindung an einem anderen Ort stattfindet als dem Ort, an dem sich der Sensor befindet, mag als ein Messgerät oder ein Feldgerät in diesem Text auch ein Sensor alleine bezeichnet werden. Insbesondere weist der Sensor eine Rohdatenschnittstelle auf, an der Rohmessdaten oder Rohdaten bereitgestellt werden. Bei den Rohmessdaten mag es sich um eine digitalisierte Echokurve handeln. Die Rohmessdaten sind dadurch charakterisiert, dass sie mit dem physikalischen Effekt, der für die Messung eingesetzt wird, in einer engen Beziehung stehen. Um den Zielmesswert zu ermitteln mag es jedoch nötig sein, die Rohmessdaten mittels einer digitalen Datenverarbeitung weiter zu verarbeiten. Eine solche digitale Verarbeitung mag jedoch extern zu dem Messgerät oder Sensor angeordnet sein. In anderen Worten mögen als Rohmessdaten die Messwerte bezeichnet werden, die mittels Hardware, also beispielsweise mittels physikalischer Sensoren, FPGAs (Field Programmable Gate Arrays) oder Analog-/Digitalwandler erzeugt werden können. Somit mag das Messgerät im Wesentlichen ohne Signalverarbeitung auskommen. Ein Prozessor, mag in einem Sensor im Wesentlichen nur für die Steuerung eines Programmablaufs, aber nicht für die Weiterverarbeitung, Berechnung oder Aufbereitung von Daten vorgesehen sein. Sämtliche Berechnungen, für die ein Prozessor genutzt wird und die die Rohmessdaten umwandeln, mögen extern zu dem Sensor ablaufen.

Um die Rohdaten oder Rohmessdaten von den tatsächlich interessierenden Messwerten zu unterscheiden, mögen die tatsächlich interessierenden Messwerte als Zielmesswerte bezeichnet werden. Bei einer Füllstandmessung mittels eines Laufzeit oder Radarmessverfahrens werden physikalisch Laufzeiten von Reflexionen mittels einer Echokurve physikalisch erfasst. Tatsächlich interessiert jedoch ein Füllstand als Zielmesswert, der aus den Laufzeiten oder Echokurven ermittelt werden mag. Dazu werden die Rohmessdaten oder physikalische Messwerte in den zugehörigen Zielmesswert umgerechnet.

Eine Auswertevorrichtung , insbesondere eine externe Auswertevorrichtung, kann ein Leitsystem oder ein Zentralrechner mit entsprechenden Auswertealgorithmen sein. Ein Auswertealgorithmus mag in einem Programmelement realisiert sein, welches auf einem Prozessor der Auswertevorrichtung ausgeführt wird und welches aus den Rohmessdaten die tatsächlich interessierenden Messwerte oder Zielmesswerte ermittelt. Der Prozessor auf der Auswertevorrichtung, der für die Verarbeitung der Rohmessdaten vorgesehen ist, ist ein anderer Prozessor als der Prozessor, der ggf. auf dem Messgerät oder Sensor vorgesehen ist. Der Prozessor, der für die Verarbeitung der Rohmessdaten vorgesehen ist, mag leistungsfähiger oder schneller sein, als der Prozessor, der auf dem Sensor vorgesehen ist. Ebenso mag der Prozessor auf der Auswertevorrichtung einen höheren Energieverbrauch aufweisen, als der Prozessor, der auf dem Messgerät vorgesehen ist.

Es können auch mehrere oder eine Vielzahl von Echokurven, die von einer Vielzahl von Messgeräten geliefert werden, auf einem einzigen Rechnersystem zentral ausgewertet werden, um die zugehörigen Füllstände, die von der Vielzahl von Messgeräten gemessen werden, zentral zu berechnen. Auf dem Prozessor der Auswertevorrichtung können auch mehrere Berechnungen, z.B. auch von verschiedenen Messgeräten, parallel oder im Multitaskingbetrieb ablaufen. Um die Rohmessdaten an das zentrale Rechensystem, den zentralen Server, die zentrale Auswertevorrichtung oder das Zentralrechensystem zu transportieren, kann als Transportmedium das Internet gewählt werden. Es kann jedoch auch jedes andere Kommunikationsnetz genutzt werden, welches beispielsweise über eine drahtlose Verbindung erreichbar ist. Eine drahtlose Verbindung kann ein UMTS (Universal Mobile Telecommunications System) oder ein LTE Netz sein. Um die Anpassung an das Übertragungsnetz vorzunehmen, mag die Versendeeinrichtung der Übertragungsvorrichtung als ein UMTS Modem oder als ein LTE (Long Term Evolution) Modem ausgestaltet sein. Durch die Verwendung eines UMTS Modems kann eine im Wesentlichen ausreichende Geschwindigkeit erreicht werden, um eine ausreichende Anzahl von Echokurven zu übertragen und um somit der Frequenz der Bereitstellung von Echokurven gerecht zu werden. Die Übertragung mag mit einer Übertragungseinrichtung oder einer Versendeeinrichtung erfolgen, welche als spezieller Adapter ausgebildet sein kann. Solch ein Adapter kann beispielsweise das UMTS Modem aufweisen. Die Versendeeinrichtung mag auch in der Lage sein, die Verbindung zum Zentralrechner über das Kommunikationsnetz aufzubauen und die Echokurven, die über die Rohdatenschnittstelle aus dem Sensor entgegengenommen wurden, an den Zentralrechner weiterzuleiten. Die Rohmessdaten können in dem Zentralrechner mittels entsprechender Umwandelalgorithmen in die gewünschten Messwerte umgerechnet werden, wie beispielsweise in einen Füllstand oder Grenzstand, in einen Druck oder in eine Temperatur. In anderen Worten mag in der Auswertevorrichtung oder in dem Zentralrechner mittels einer Signalverarbeitungseinrichtung aus den Rohmessdaten der Messgeräte oder Sensoren ein interessierender Zielmesswert berechnet werden. Dabei können auch unterschiedliche vorgebbare oder auswählbare Algorithmen zur Berechnung des Zielmesswerts genutzt werden. Beispielsweise mag ein Verfahren zur Positionsbestimmung eines Maximums der Echokurve genutzt werden, um einen Füllstand zu berechnen.

Es mag als ein Aspekt der Erfindung angesehen werden, die Berechnung eines Zielmesswerts, wie beispielsweise das Berechnen eines Füllstands aus einer einzigen oder aus einer Vielzahl von Echokurven, an einem zentralen Ort außerhalb oder extern des Messgeräts durchzuführen. Ein Messgerät mag an seiner Rohdatenschnittstelle die Rohdaten einer Echokurve bereitstellen.

Die Rohdaten der Echokurve mögen vor Ort, d.h. innerhalb des Messgeräts, von dem Messgerät, Sensor oder Feldgerät erfasst werden. Die Berechnung des Wertes des Füllstands aus den Rohdaten einer Echokurve mag jedoch auf einem anderen Rechnersystem erfolgen, welches örtlich getrennt von dem Messgerät angeordnet ist, z.B. getrennt durch ein Kommunikationsnetz. Wegen der lokalen Trennung mögen für das Erfassen der Rohdaten und das Verarbeiten der Rohdaten unterschiedliche Prozessoren eingesetzt werden. Die Echokurve mag auch als Hüllkurve bezeichnet werden. Eine Echokurve mag eine fest vorgegebene Anzahl an Stützwerten aufweisen, die innerhalb eines Messzyklus bereitgestellt werden. Eine Echokurve kann beispielsweise mit einer Frequenz von 10 Echokurven pro Sekunde bereitgestellt werden. In einem Beispiel kann eine Echokurve mit einer Frequenz erstellt oder bereitgestellt werden, die in einem Bereich von 1 bis 20 Kurven pro Sekunde liegt, also auch 18, 19 oder 20 Kurven pro Sekunde.

Gemäß einem anderen Aspekt der vorliegenden Erfindung ist die Rohdatenschnittstelle eine Messgeräteschnittstelle ausgewählt aus der Gruppe von Messgeräteschnittstellen, die Gruppe bestehend aus einer I²C Schnittstelle, einer HART® Schnittstelle und einer 4...20mA Schnittstelle bzw. einer 4 bis 20 mA Schnittstelle.

Gemäß einem anderen Aspekt der vorliegenden Erfindung ist die Rohdatenschnittstelle oder die Messgeräteschnittstelle zum Überbrücken einer in dem Messgerät vorhandenen Auswertevorrichtung eingerichtet.

Eine Auswertevorrichtung, welche in einem Messgerät vorhanden ist, mag vor Ort den Zielmesswert ermitteln. Der direkte Anschluss einer Übertragungsvorrichtung an den Sensor mag die vorhandene Auswertevorrichtung überbrücken. Durch das Überbrücken einer solchen vorhandenen Auswertevorrichtung mag die Auswertevorrichtung außer Betrieb gesetzt werden und die Übertragungsvorrichtung mag die Rohdaten eines Sensors an die externe Auswertevorrichtung weiterleiten, ohne dass die in einem Messgerät möglicherweise vorhandene Auswertevorrichtung benutzt wird. Ein von der lokal in einem Messgerät vorhandenen Auswertevorrichtung erzeugtes Messergebnis, beispielsweise ein Füllstand, kann auf diese Weise ignoriert werden. Es mag folglich möglich sein, ein Upgrade eines bereits existierenden Feldgeräts zu vermeiden, ohne dass der die Rohdaten erzeugende Sensor entsorgt werden muss. Eine Weiterentwicklung von Auswertealgorithmen auf dem Zentralserver kann auf diese Weise auch für bereits installierte Messgeräte genutzt werden. In einem Beispiel kann eine Überbrückung mittels eines Schalters erreicht werden, welcher einem Prozessor des Messgeräts mitteilt an einer vorgebbaren Schnittstelle nach dem Schalten nur noch Rohdaten bereitzustellen. Das Schalten eines solchen Schalters kann auch über ein Kommando an der Schnittstelle erfolgen.

Das Überbrücken einer Auswerteeinrichtung mag eine Nachrüstung eines Messgeräts für die Nutzung mit der Auswertevorrichtung ermöglichen.

Gemäß einem anderen Aspekt der vorliegenden Erfindung weist die Übertragungsvorrichtung für ein Messgerät eine Kennzeichnungseinrichtung auf, welche neben dem Kennzeichnen der Rohmessdaten auch eine Verschlüsselung der Rohmessdaten durchführt.

Gemäß einem anderen Aspekt der vorliegenden Erfindung weist eine Versendeeinrichtung eine Schnittstelle auf, welche aus einer Gruppe von Übertragungsschnittstellen ausgewählt ist. Die Gruppe der Übertragungsschnittstellen besteht aus einer drahtgebundenen Schnittstelle, einer Funkschnittstelle und einer Weitverkehrsnetzschnittstelle. Eine entsprechende Schnittstelle mag sowohl das Konvertieren von zur Verfügung gestellten Rohdaten in spezifische Netzwerkprotokolle aufweisen als auch die Übertragung der Daten oder das Anstoßen der Übertragung der entsprechenden Daten. Um die Rohdaten für die Übertragung über das Kommunikationsnetzwerk anzupassen, mag die Übertragungsvorrichtung eine entsprechende Anpassung vornehmen.

Gemäß noch einem anderen Aspekt der Erfindung ist die Übertragungsvorrichtung eingerichtet einen berechneten Messwert zu empfangen und bereitzustellen.

Da für die Berechnung des Zielmesswerts aus den Rohdaten eine externe Datenverarbeitungseinrichtung genutzt wird, beispielsweise ein Zentralserver, mag die Berechnung des Zielmesswerts extern zu dem Messgerät erfolgen. Da jedoch oftmals der Zielmesswert, beispielsweise der Füllstandwert, vor Ort an dem Messgerät selbst abgelesen werden soll, kann auch vorgesehen sein, dass der berechnete Messwert oder Zielmesswert von dem Messgerät, insbesondere von der Übertragungsvorrichtung, empfangen wird und auch von ihr bereitgestellt wird. Zur Bereitstellung kann eine Anzeigeneinrichtung, wie beispielsweise ein Display, genutzt werden.

Gemäß noch einem anderen Aspekt der vorliegenden Erfindung ist die Übertragungsvorrichtung in das Messgerät integrierbar.

Die Übertragungsvorrichtung mag mit dem Messgerät nach dem Integrieren eine Einheit bilden. Beispielsweise mag die Übertragungsvorrichtung auf ein Messgerät aufschraubbar sein, so dass das Gehäuse eines Messgeräts mit einer Übertragungsvorrichtung im Wesentlichen nicht von dem Gehäuse eines Messgeräts ohne Übertragungsvorrichtung unterscheidbar ist. Alternativ kann die Übertragungsvorrichtung eine existierende überflüssige Auswerteeinrichtung auf einem bestehenden Messgerät ersetzen. Die Übertragungsvorrichtung mag sich beispielsweise mittels eines Schraubgewindes oder Bajonettanschlusses auf das Messgerät aufsetzen lassen. In einem Beispiel mag das Messgerät eine aufgeschraubte Übertragungsvorrichtung erkennen und seine interne Auswertevorrichtung, falls vorhanden, abschalten. Alternativ oder ergänzend mag die Übertragungsvorrichtung das Abschalten übernehmen, indem sie beispielsweise eine interne Auswertevorrichtung des Messgeräts überbrückt.

Gemäß noch einem anderen Aspekt der vorliegenden Erfindung mag der von der Auswertevorrichtung berechnete Messwert oder Zielmesswert ein Füllstand, ein Druck, ein Grenzstand, eine Durchflussmenge, eine Druckdifferenz oder eine Frequenz einer Bewegung sein. Die Messung der Frequenz einer Bewegung kann eine Zielmessgröße bei der Zustandsmessung von einer Drehbewegung oder von einer Welle sein.

Gemäß noch einem anderen Aspekt der vorliegenden Erfindung ist die Berechnungseinrichtung der Auswertevorrichtung zum Auswerten einer Echokurve eingerichtet.

Gemäß noch einem anderen Aspekt der vorliegenden Erfindung ist die Bereitstelleinrichtung der Auswertevorrichtung zum internen Bereitstellen oder zum externen Bereitstellen des berechneten Messwerts eingerichtet.

Die Auswertevorrichtung mag eine Anzeigeneinrichtung aufweisen, an der der berechnete Messwert oder Zielmesswert angezeigt werden kann. Alternativ oder zusätzlich mag die Auswertevorrichtung jedoch auch den Zielmesswert an das Messgerät übertragen, so dass der berechnete Messwert oder Zielmesswert direkt an dem Messgerät darstellbar ist. Durch das Übertragen des Zielmesswertes ist der Zielmesswert vor Ort verfügbar obwohl die Berechnung extern stattgefunden hat.

Zur Bereitstellung des Zielmesswerts an einem anderen Ort kann auch eine Übertragungseinrichtung als Bereitstellungseinrichtung vorgesehen sein.

Es soll angemerkt werden, dass unterschiedliche Aspekte der Erfindung mit Bezug auf unterschiedliche Gegenstände beschrieben wurden. Insbesondere wurden einige Aspekte mit Bezug auf Vorrichtungsansprüche beschrieben, wohingegen andere Aspekte mit Bezug auf Verfahrensansprüche beschrieben wurden. Ein Fachmann kann jedoch der vorangehenden Beschreibung und der folgenden Beschreibung entnehmen, dass, außer es wird anders beschrieben, zusätzlich zu jeder Kombination von Merkmalen, die zu einer Kategorie von Gegenständen gehört, auch jede Kombination zwischen Merkmalen als von dem Text offenbart angesehen wird, die sich auf unterschiedliche Kategorien von Gegenständen bezieht. Insbesondere soll auch eine Kombination zwischen Merkmalen von Vorrichtungsansprüchen und Merkmalen von Verfahrensansprüchen offenbart sein.

### Kurze Beschreibung der Figuren

Im Folgenden werden weitere exemplarische Ausführungsbeispiele der vorliegenden Erfindung mit Verweis auf die Figuren beschrieben.
Fig. 1 zeigt ein Messsystem gemäß einem exemplarischen Ausführungsbeispiel der vorliegenden Erfindung.
Fig. 2 zeigt eine Übertragungsvorrichtung gemäß einem exemplarischen Ausführungsbeispiel der vorliegenden Erfindung.
Fig. 3 zeigt eine Auswertevorrichtung gemäß einem exemplarischen Ausführungsbeispiel der vorliegenden Erfindung.
Fig. 4 zeigt ein Flussdiagramm für ein Verfahren zum Übertragen von Rohmessdaten mittels einer Übertragungsvorrichtung gemäß einem exemplarischen Ausführungsbeispiel der vorliegenden Erfindung.
Fig. 5 zeigt ein Blockschaltbild einer Verbindung eines Messgeräts mit einer Übertragungsvorrichtung gemäß einem exemplarischen Ausführungsbeispiel der vorliegenden Erfindung.
Fig. 6 zeigt ein weiteres Blockschaltbild einer Verbindung eines Messgeräts mit einer Übertragungsvorrichtung gemäß einem exemplarischen Ausführungsbeispiel der vorliegenden Erfindung.
Fig. 7 zeigt ein weiteres Blockschaltbild einer Verbindung eines Messgeräts mit einer Übertragungsvorrichtung mit einem Schalter an einem Messgerät gemäß einem exemplarischen Ausführungsbeispiel der vorliegenden Erfindung.

### Detaillierte Beschreibung von Ausführungsbeispielen

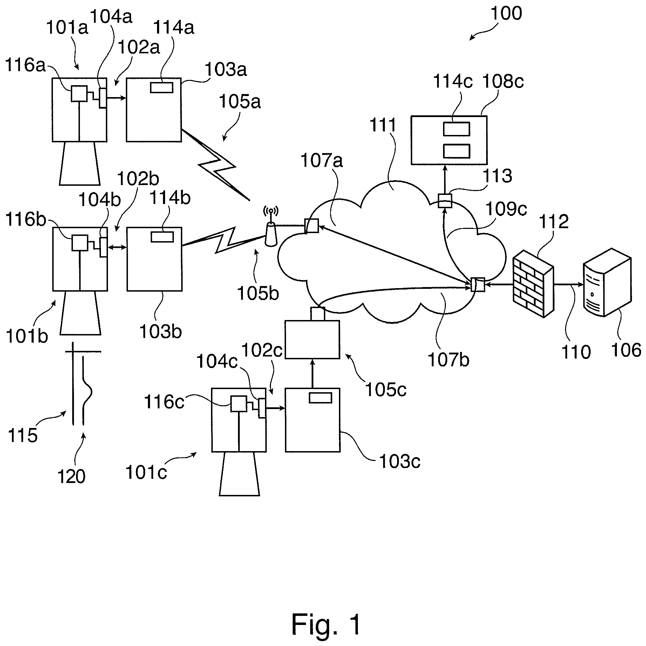

Die Darstellungen in den Figuren sind schematisch und nicht maßstäblich. In der folgenden Beschreibung der Fig. 1 bis 4 werden die gleichen Bezugsziffern für gleiche oder sich entsprechende Elemente verwendet.

Fig. 1 zeigt ein Messsystem 100 gemäß einem exemplarischen Ausführungsbeispiel der vorliegenden Erfindung. Das Messsystem 100 weist drei Messgeräte 101a, 101b, 101c auf. Es können jedoch beliebig viele Messgeräte verwendet werden. Die Messgeräte 101a, 101b, 101c sind im vorliegenden Fall als Sensoren 101a, 101b, 101c dargestellt, also als Messgeräte ohne eine integrierte Auswerteeinrichtung, ohne Verarbeitungseinrichtung, ohne Berechnungseinrichtung oder mit einer abgeschalteten internen Auswerteeinrichtung. Über die Rohdatenschnittstellen 102a, 102b, 102c greifen die Übertragungsvorrichtungen 103a, 103b, 103c auf die Messgeräte 101a, 101b, 101c zu. Die Rohdatenschnittstelle 102a, 102b, 102c einer Übertragungsvorrichtung ist direkt mit einer Rohdatenschnittstelle 104a, 104b, 104c der Messgeräte verbunden. Die Übertragungsvorrichtungen 103a, 103b, 103c weisen die drahtlosen Versendeeinrichtungen 105a, 105b und die drahtgebundene Versendeeinrichtung 105c in der Übertragungsvorrichtung 103c auf. Die Versendeeinrichtung kann als eine Übertragungseinrichtung ausgestaltet sein. Die erste drahtlose Versendeeinrichtung 105a kann beispielsweise eine UMTS Versendeeinrichtung sein, die zweite drahtlose Versendeeinrichtung 105b kann eine LTE Versendeeinrichtung sein. Als drahtlose Versendeeinrichtungen kommt ein Mobilfunknetz 105a, 105b in Frage. Die drahtgebundene Versendeeinrichtung 105c ist als DSL Anschluss (Digital Subscriber Line) ausgebildet. Die Versendeeinrichtungen 105a, 105b, 105c können sowohl unidirektional als auch bidirektional betrieben werden. In dem Ausführungsbeispiel der Fig. 1 ist sowohl die UMTS Schnittstelle 105a als auch die LTE Schnittstelle 105b als bidirektionale Schnittstelle ausgebildet. Die Rohdatenschnittstelle 102a und 102c ist als unidirektionale Rohdatenschnittstelle ausgebildet und die Rohdatenschnittstelle 102b ist als bidirektionale Rohdatenschnittstelle ausgebildet. Die Rohdaten, welche die Übertragungsvorrichtung 103a, 103b, 103c über die Rohdatenschnittstellen 102a bzw. 102b von dem Messgerät 101a, 101b empfängt, können in Richtung des Zentralrechners 106 übertragen werden. Ebenfalls können Messwerte oder Zielmesswerte, welche von dem Zentralrechner 106 berechnet oder verarbeitet wurden, zurück zu der Übertragungsvorrichtung 103a, 103b übertragen werden. Entsprechend ist die Netzwerkverbindung 107a auch als bidirektionale Netzwerkverbindung 107a ausgebildet.

Eine bidirektionale Verbindung erlaubt es einer Übertragungsvorrichtung und insbesondere einem zugeordneten Messgerät nicht nur Rohdaten zu versenden sondern verarbeitete Daten zu empfangen, die beispielsweise von einer externen Auswertevorrichtung bereitgestellt werden. Bei der bidirektionalen Verbindung mag es möglich sein durch verschiedene Sende- und oder Empfangsadressen, IDs, d.h. Kennungen, oder Merkmale, wie Seriennumer oder Gerätename, oder eine beliebige Kombination der genannten Merkmale und Eigenschaften zu erkennen, welche Daten zu welchem System zugeordnet werden müssen und wie die geforderte Datenaufbereitung für das Quellsystem auszusehen hat. Auch Analyse-, Konfigurations-, Diagnose-, oder Debug-Informationen mögen über solch eine bidirektionale Schnittstelle versendet werden. Die bidirektionale Schnittstelle und/oder die bidirektionale Verbindung kann ständig geöffnet sein oder aber während der Berechnung in der externen Auswertevorrichtung geschlossen sein. Als eine geöffnete Verbindung mag eine Verbindung bezeichnet werden, die nach dem Verbindungsaufbau zu der externen Auswertevorrichtung, während die Auswertevorrichtung die Berechnung durchführt, aufgebaut bleibt, so dass ein zu dieser Verbindung gehörender Rückkanal für die Rück-Übertragung der Zielmesswerte genutzt werden kann. Eine geschlossene Verbindung mag ein Szenario beschreiben, bei dem entweder die Übertragungsvorrichtung eine aufgebaute Verbindung zu der Auswertevorrichtung während der Berechnung abbaut, um sie erneut zum Empfang der berechneten Daten wieder aufzubauen. Oder ein Szenario, bei dem die Übertragungsvorrichtung eine Verbindung zum Übertragen der Rohdaten zu der Auswertevorrichtung aufbaut, diese Verbindung nach der Übertragung abbaut und die Auswertevorrichtung nach der Berechnung eine Verbindung zu der Übertragungsvorrichtung aufbaut, um die berechneten Zielmesswerte zu übertragen. Bei dem zuletzt genannten Szenario kann die bidirektionale Verbindung durch zusammengehörende unidirektionale Verbindungen realisiert werden. Die Ergebnisse der Berechnung können von der Übertragungsvorrichtung nach dem Ablaufen einer Zeit in einem Timer von der Auswertevorrichtung abgeholt werden oder die externe Auswertevorrichtung meldet sich selbstständig bei der Übertragungsvorrichtung.

Die Rohdatenschnittstelle 102c erlaubt als unidirektional ausgebildete Rohdatenschnittstelle lediglich die Übertragung vom Messgerät 101c zu der Übertragungsvorrichtung 103c und von dieser über den DSL Anschluss 105c und über die unidirektionale Verbindung 107b zu dem Zentralrechner 106. Ein für das Messgerät 101c berechneter Messwert oder Zielmesswert wird auf das Leitsystem 108c über die unidirektionale Messwertverbindung 109c übertragen und auf dem Display 114c dargestellt. Eine Darstellung des Zielmesswertes auf der Übertragungsvorrichtung 103c ist nicht vorgesehen. Der Zentralrechner 106 weist entsprechende Algorithmen zur Berechnung von Zielmesswerten aus den empfangenen Rohmessdaten auf.

Der Zentralrechner 106 ist über die bidirektionale Netzwerkschnittstelle 110 mit dem Kommunikationsnetz 111 verbunden. Die Netzwerkverbindungen 107a, 107b können sowohl verbindungsorientierte Verbindungen, d. h. mit vorangehendem Verbindungsaufbau, oder verbindungslose Verbindungen sein, also paketorientierte Verbindungen. Bei einer verbindungslosen Übertragung wird jedes verschickte Datenpaket mittels einer individuellen Adresse versehen, um sein Ziel zu erreichen, beispielsweise, um die Auswertevorrichtung 106 zu erreichen. Die Auswertevorrichtung 106 kann als Zentralserver 106 ausgebildet sein und mit einer Software oder mit einem Programmcode geladen sein, um die Rohdaten zu verarbeiten oder auszuwerten. Das Verfahren zum Auswerten weist das Empfangen von mit einer Messgerätekennung gekennzeichneten Rohmessdaten und das Verwalten von zumindest einem Messgerät 101a, 101b, 101c auf. Nach dem Empfangen der Rohmessdaten werden die empfangenen Rohmessdaten zu einem der zumindest einen verwalteten Messgeräten 101a, 101b, 101c zugeordnet. In einer Berechnungseinrichtung oder in einer Verarbeitungseinrichtung wird aus den empfangenen Romessdaten oder Rohdaten ein Zielmesswert berechnet und dieser an eine Bereitstelleinrichtung 114a, 114b, 114c zum Bereitstellen weitergeleitet.

Aus Sicherheitsgründen kann zwischen dem Netzwerk 111 und der Auswertevorrichtung 106 eine Firewall 112 angeordnet sein, welche einen ungewünschten Zugriff von dem Kommunikationsnetz 111 auf die Auswertevorrichtung 106 verhindert. Das Netzwerk 111 kann jedes Kommunikationsnetzwerk 111 sein, beispielsweise das Internet. Das Leitsystem 108c kann über die Netzwerkschnittstelle 113, die ebenfalls unidirektional ausgebildet ist, die Zielmesswerte empfangen, die von der Auswertevorrichtung ermittelt worden sind, und auf einem Display 114c anzeigen. Das Leitsystem 108c kann ferner zumindest eine Anzeigeeinrichtungen 114c oder eine Vielzahl von Anzeigeeinrichtungen 114c aufweisen, die jeweils einem Messgerät 101a, 101b, 101c zugeordnet sind. Alternativ kann auch die Übertragungsvorrichtung 103a, 103b eine Anzeigeeinrichtung 114a, 114b oder ein Display 114a, 114b aufweisen, über das entsprechende von dem Zentralrechner 106 ermittelte Zielmesswerte angezeigt werden können. Nicht in Fig. 1 dargestellt, jedoch als eine alternative Ausführungsform ist es möglich, die Anzeigeeinrichtung 114a, 114b auf dem Messgerät 101a, 101b oder Sensor 101a, 101b anzuordnen, um eine Anzeige des Zielmesswertes vor Ort zu ermöglichen.

Bei den Anzeigeeinrichtungen 114a, 114b handelt es sich um lokale Anzeigeeinrichtungen, die vor Ort, d.h. in der Nähe der Messgeräte angeordnet sind, ohne dass ein Übertragungsnetz 111 zwischen der Anzeigeeinrichtung 114a, 114b und dem Messgerät 101a, 101b angeordnet ist. Bei den Anzeigeeinrichtungen 114c handelt es sich um entfernte Anzeigeeinrichtungen, wobei zwischen den Anzeigeeinrichtungen, den Übertragungsvorrichtungen 103a, 103b, 103c und/oder der Auswertevorrichtung 106 ein Übertragungsnetz 111 angeordnet ist. Eine Anzeigeeinrichtung wird folglich als entfernte Anzeigeeinrichtung 114c bezeichnet, wenn sich ein Kommunikationsnetz 111 zwischen der Anzeigevorrichtung 114c und dem Messgerät 101c und/oder der Übertragungsvorrichtung 103c befindet.

An dem Messgerät 101b ist in Fig. 1 schematisch eine Hüllkurve oder Echokurve 120 in einem Diagramm 115 dargestellt, um zu zeigen, dass ein Messgerät 101b die Rohdaten liefert. Diese Echokurve 120 wird beispielsweise generiert, indem ein Radarpuls von dem Messgerät 101b in Richtung einer Füllgutoberfläche ausgesendet wird und der Zeitverlauf eines von diesem Radarimpuls hervorgerufenen Empfangssignal mittels einer in Fig. 1 nicht dargestellten in dem Messgerät 101b enthaltenen Hochfrequenzantenne empfangen und aufgezeichnet wird. Die Echokurve 120 zeigt einen Spannungsverlauf über der Zeit. Das Empfangssignal liegt als kontinuierliche Echokurve in analoger Form vor. In dem Analog/Digitalwandler 116a, 116b, 116c werden die empfangenen HF-Pulse der analogen Echokurve 120 in eine digitale Darstellung der Echokurve gewandelt. Die digitale Darstellung der Echokurve weist eine Vielzahl von Abtastwerten an Stützstellen auf und der Verlauf der digitalen Echokurve entspricht im Wesentlichen dem Verlauf der anlogen Echokurve. Die Abtastwerte der digitalen Echokurve (nicht dargestellt in Fig. 1) werden an die Rohdatenschnittstelle 104a, 104b, 104c der Messgeräte 101a, 101b, 101c weitergeleitet. An dieser Rohdatenschnittstelle 104a, 104b, 104c der Messgeräte kann auf die von den Analog/Digitalwandlern 116a, 116b, 116c bereitgestellten Rohdaten, insbesondere auf die Rohdaten der Echokurve 120, mittels der Rohdatenschnittstelle 102a, 102b, 102c der Übertragungsvorrichtungen 103a, 103b, 103c direkt zugegriffen werden. Die Rohdaten sind diskrete Spannungswerte über der Zeit.

Bei einem Zugriff auf die Rohdaten kann ein Poll-Mechanismus eingesetzt werden. Ein Poll-Mechanismus kann vorsehen, in einem bestimmten zeitlichen Abstand, der beispielsweise der Periodendauer eines Messzyklus für das Erstellen der Echokurve 120 entspricht, jeweils die zu einer einzigen Echokurve gehörenden Rohdaten 104a, 104b, 104c mittels der Übertragungsvorrichtung 103a, 103b, 103c anzufordern. Alternativ zu einem Poll-Mechanismus kann auch einen Push-Mechanismus vorgesehen sein. Dabei werden, nachdem die Rohdaten einer Messung einer Echokurve an der Rohdatenschnittstelle 104a, 104b, 104c vorliegen, aktiv seitens des Messgeräts 101a, 101b, 101c die Rohdaten von der Rohdatenschnittstelle 104a, 104b, 104c der Messgeräte an die Rohdatenschnittstelle 102a, 102b, 102c der Übertragungsvorrichtungen weitergegeben. Für solch einen Mechanismus kann die Rohdatenschnittstelle das Vorliegen einer Echokurve oder von Rohdaten über eine spezielle Signalisierungsverbindung oder Signalisierungsleitung vorsehen.

Ohne einer im Wesentlichen weiteren Verarbeitung, insbesondere ohne einer weiteren Verarbeitung mittels Software, werden die Rohdaten so, wie sie von den Analog/Digitalwandlern 116a, 116b, 116c seitens der Übertragungsvorrichtung 103a, 103b, 103c empfangen wurden, über die Netzwerkschnittstellen 105a, 105b, 105c an das Kommunikationsnetz 111 weitergegeben. Die Rohdaten werden lediglich mit Informationen versehen, wie beispielsweise einer Zieladresse der Auswertevorrichtung 106, die für das Transportieren der Rohdaten durch das Kommunikationsnetz 111 notwendig sind, um das Ziel, die Auswertevorrichtung 106, zu erreichen, und die Rohdaten werden versendet. Zum Versenden kann eine Funkverbindung 105a, 105b oder eine drahtgebundene Verbindung 105c genutzt werden. Die zu übertragenden Rohdaten werden im Netz 111 über die Netzwerkverbindungen 107a, 107b übertragen.

Die Rohdaten mögen auch mit weiteren Informationen oder einem Ordnungsparameter ausgestattet sein, wie beispielsweise einem Datum, einem Zweitwert oder Zeitstempel, einem Index, einer Anlagenbezeichnung, einem Gerätebetreiber, einem Gerätename oder einer Software-Version.

Zur Darstellung von Rohdaten kann eine geordnete Liste genutzt werden. In der Tab. 1 ist beispielsweise eine Liste eines Zeitverlaufs einer Spannung dargestellt, wie er beispielsweise bei einer Echokurve genutzt wird. Es handelt sich bei der Liste der Tab. 1 um eine dreidimensionale Liste, mit den drei Spalten Zeit, Messwert oder Rohmesswert und Einheit. Die einzelnen Rohmesswerte dürfen sowohl positive wie auch negative Werte aufweisen.

**Tab. 1**

| Zeit in [ms] | Messwert | Einheit |
|---|---|---|
| ... | ... | ... |
| 5 | 5x10⁻³ | V |
| 6 | 6x10⁻³ | V |
| 7 | -5x10⁻³ | V |
| 8 | -7x10⁻³ | V |
| ... | ... | ... |

Aufgrund des bidirektionalen Charakters der Verbindung 107a werden über diese Verbindung sowohl Rohdaten oder Echokurvendaten wie auch ermittelte Zielmesswerte zurück zu der Übertragungsvorrichtung oder dem Messgerät übertragen. Da die Verbindung 107b lediglich als unidirektionale Verbindung eingerichtet ist, werden über diese Verbindung lediglich digitale Echokurvendaten oder Rohdaten in Richtung zu der Auswertevorrichtung 106 übertragen.

Die Auswertevorrichtung 106 oder der Zentralrechner 106 weist eine Vielzahl von verschiedenen Berechnungsalgorithmen auf, zwischen denen in einem Beispiel gewählt werden kann. Ebenso kann auf den Zentralrechner 106 zugegriffen werden, um die Auswertealgorithmen festzulegen, mit denen aus den Rohdaten die Zielmesswerte ermittelt werden. Diese Auswertealgorithmen können ausgewechselt werden. Sollte ein neuer, genauerer Algorithmus für die Zielmesswertberechnung gefunden werden, so kann dieser folglich lediglich auf der Auswertevorrichtung 106 eingespielt werden und für die jeweils zugeordneten Messgeräte zum Einsatz kommen. Die berechneten Messwerte oder Zielmesswerte können entweder über eine separate Anzeige 114c oder über das Leitsystem 108c zentral zur Verfügung gestellt werden. Beispielsweise kann so auch eine Bedienwarte (control room) mit einer Vielzahl von Messwerten gespeist werden, die von dem Zentralrechner 106 oder von der Auswertevorrichtung 106 erzeugt wurden. Zusätzlich oder alternativ zu der Darstellung in einer Warte können die Messwerte aber auch direkt auf die Übertragungsvorrichtungen 103a, 103b und/oder auf die Messgeräte 101a, 101b zurückübertragen werden, um an dem jeweiligen Ort der Messung auch das Zielmessergebnis oder den Zielmesswert zur Verfügung zu haben. Die Versendeeinrichtungen 105a, 105b, 105c können auch eine Verschlüsselung der Daten vorsehen. Im Fall einer Verschlüsselung wird eine komplementäre Entschlüsselfunktion auf dem Zentralrechner 106 vorgesehen. Die Rohdaten können beispielsweise in einem proprietären Dateiformat oder in einer geordneten Liste vorliegen, wie auch z.B. als CSV (Comma Separated Values)-Datei. Die Algorithmen können spezifiziert sein für die verschiedenen Füllgüter oder für spezielle mechanische Anordnungen.

Durch das Übertragen der Rohmessdaten an einen zentralen Server oder einen zentralen Rechner 106 können die Algorithmen zum Berechnen der Zielmesswerte aus den Rohdaten schnell verändert werden, indem beispielsweise lediglich ein Algorithmus auf dem zentralen Rechner 106 ausgetauscht wird, beispielsweise durch das Einspielen eines Patches oder einer neuen Softwarebibliothek. Ein Ändern der Software auf den Messgeräten 101a, 101b, 101c selbst kann somit vermieden werden. Dadurch kann einerseits ein zeitlicher Aufwand für die Wartung verringert werden, wodurch sich auch die Kosten für Updates ermäßigen können. Ein Softwareupdate oder eine Parameterveränderung vor Ort, d. h. bei den Messgeräten selbst, entfällt. Es ist also ausreichend lediglich die Sensoren inklusive HF-Technik und A/D Wandler 101a, 101b, 101c, 116a, 116b, 116c bereitzustellen und die Daten über die jeweiligen Rohdatenschnittstellen 104a, 104b, 104c auszugeben. Eine zusätzliche Auswerteeinrichtung, die aus den Rohdaten die Messwerte berechnet, kann entfallen, wodurch die Messgeräte 101a, 101b, 101c kleiner gebaut werden können. Außerdem benötigen die Messgeräte 101a, 101b, 101c weniger Leistung oder wendiger Energie als vergleichbare Messgeräte mit einer Auswertung vor Ort, da das Aufwenden von Leistung oder Energie für das Berechnen der Zielmesswerte vermieden werden kann. Außerdem können die Rohdaten auf dem Zentralrechner 106 zwischengespeichert werden, weshalb die Auswerteelektronik auf einem Messgerät bzw. in dem Zentralrechner 106 auch langsamer arbeiten kann und damit mit billigeren Komponenten aufgebaut sein kann, als dies der Fall wäre, wenn eine Echtzeitauswertung auf den Messgeräten zu erfolgen hätte.

Durch den Einsatz schneller Breitbandverbindungen oder Internetbreitbandverbindungen, wie UMTS, LTE oder DSL, können ausreichend viele Daten übertragen werden. D. h. die Daten können mit einer sehr hohen Frequenz von dem Messgerät zu der Auswertevorrichtung 106 transportiert werden, wodurch sehr hohe Messzyklen für das Bereitstellen der Echokurven 120 erreicht werden können. Es können so größere Messzyklen als 1...20 Messzyklen pro Sekunde erreicht werden. Durch die schnelle Datenweitergabe ohne Verarbeitung der Rohdaten können Messzyklen in dem Bereich 1 bis 50 Messzyklen pro Sekunde oder 21 bis 50 Messzyklen erreicht werden. Die Auswertevorrichtung kann echtzeitfähig sein.

Anlagen oder Messsysteme 100 mit besonderen Konstellationen können von einem Hersteller oder Betreiber des Messsystems 100, insbesondere von dem Hersteller bzw. dem Betreiber der Auswertevorrichtung 106 über einen Zugriff auf den zentralen Rechner 106 oder auf die zentrale Auswertevorrichtung 106 eingerichtet werden. Ebenso kann eine Parametrierung, d. h. das Setzen der Parameter für die Messgeräte, auf der Auswertevorrichtung 106 vorgenommen werden und es muss nicht auf jedes einzelne Messgerät an teilweise unterschiedlichen und weit entfernten Orten zugegriffen werden, um die Parametrierung vorzunehmen. Beispiele für parametrierbare Eigenschaften sind: Detektionsschwellen, Filter-Parameter, Dämpfung, Tracking oder eine Störechounterdrückung. Langwierige Softwareupdates vor Ort, d. h. an den von der Auswertevorrichtung 106 weit entfernten Orten der Messgeräte 101a, 101b, 101c, zu denen unter Umständen jeweils ein Messtechniker fahren müsste, können auf dem Zentralrechner 106 schnell und auch für eine Vielzahl von Messstellen 101a, 101b, 101c vorgenommen werden, indem auf den Zentralrechner zugegriffen wird. Ein Betreiber des Zentralrechners 106 kann einen Zugriff für Betreiber der Messgeräte 101a, 101b, 101c zur Verfügung stellen, so dass unter Umständen ein nicht mit der Messtechnik betrauter Betreiber, wie ein landwirtschaftlicher Betrieb oder ein Chemiekonzern, Messgeräte, insbesondere Füllstandmessgeräte 101a, 101b, 101c, auswerten kann, ohne selbst Ahnung von dem Betrieb, von der Wartung und insbesondere von den spezifischen Auswertealgorithmen auf dem zentralen Rechner 106 zu haben.

Aufwändige und oftmals mit viel Arbeit entwickelte Softwarealgorithmen müssen außerdem nicht mehr im Feld, d. h. auf jedem der weit voneinander entfernten Messgeräte 101a, 101b, 101c, verteilt werden, sondern können von dem Hersteller oder Betreiber auf dem zentralen Server gehalten werden. Durch das Vorhandensein der Algorithmen an einem zentralen Ort, der mit speziellen Schutzmechanismen, wie einer Firewall 112, spezifisch gegen fremdes Eindringen, beispielsweise von Cyberkriminellen, geschützt werden kann, kann das Risiko des Diebstahls der Algorithmen oder des Kopierens der Algorithmen sowie das Risiko für das Kopieren der Messdaten verringert werden. Durch einen Zugriff auf die oftmals weit entfernt angeordneten Feldgeräte 101a, 101b, 101c, Sensoren 101a, 101b, 101c oder Messgeräte 101a, 101b, 101c können die schützenswerten Algorithmen nicht mehr ausgelesen oder manipuliert werden, da dort die Algorithmen zum Auswerten nicht mehr installiert sind. Das Sammeln der Rohdaten und/oder Echokurven durch den zentralen Server 106 mag es darüber hinaus ermöglichen, dass zusätzliches Auswerten zu Testzwecken, Entwicklungszwecken, Forschungszwecken und Servicezwecken möglich ist. Somit ist das Erschließen und Erforschen von neuen Anwendungsszenarien möglich. Die Analyse der Qualität von bestehenden Anlagen und des eingesetzten Algorithmus des dazugehörigen Setups kann untersucht werden. Eine Auswertung ist auch mit einer Speicherung von veralteten Messwerten möglich. Ein Auswertealgorithmus wird genutzt, um aus physikalischen Rohdaten, wie beispielsweise aus Spannungswerten, Zielmesswerte zu generieren, wie den Füllstand, eine Steilheit oder eine Festlegung von Minima oder Maxima. Beim Auswerten kann auch eine Vielzahl von Rohdaten zu einem Zielmesswert zusammengefasst werden.

Mittels eines Messsystems 100 kann eine Zentralisierung der Rechenleistung auf dem Server 106 ermöglicht werden. Durch diese Zentralisierung kann der Aufwand bei der Inbetriebnahme einer Messstelle 101a, 101b, 101c oder auch deren Wartung oder Aktualisierung verringert werden.

Die digitalen Echokurven werden von den Sensoren 101a, 101b, 101c oder von den Messgeräten 101a, 101b, 101c über Rohdatenschnittstellen bereitgestellt, wie beispielsweise über I²C, RS232 oder USB. Über eine entsprechend ausgeführte Rohdatenschnittstelle 102a, 102b, 102c der Übertragungsvorrichtung 103a, 103b, 103c kann auf diese Rohdaten, digitale Rohdaten oder Echokurven zugegriffen werden. Ein angeschlossener Mikrocontroller oder Prozessor baut eine Internetverbindung mittels eines UMTS, LTE oder DSL Modems auf und übermittelt die ausgelesenen Echokurven oder Rohdaten auf die Auswertevorrichtung 106. Die Auswertevorrichtung 106 weist im Wesentlichen auch eine Rohdatenschnittstelle auf, zum Entgegennehmen der Rohdaten, und eine Zielmesswertschnittstelle, zum Bereitstellen eines Zielmesswertes.

Die Auswertevorrichtung 106 nimmt die übertragenen unveränderten Rohdaten entgegen und ordnet sie der entsprechenden Messstelle 101a, 101b, 101c mittels einer beigefügten Messgerätekennung zu. Zum Zuordnen nutzt die Auswertevorrichtung 106 ein Kennzeichen, das mit den Rohmessdaten verbunden ist, beispielsweise eine Headerinformation im Übertragungsrahmen für die Rohdaten, um die Rohdaten zuordenbar zu machen. Die Zuordnung der Rohdaten zu den entsprechenden Messstellen 101a, 101b, 101c kann vor der Ermittlung der Zielmesswerte oder des Füllstands aus den Echokurven erfolgen oder nach der Ermittlung der Zielmesswerte, wobei im letzteren Fall eine Zuordnung der Zielmesswerte zu den jeweiligen Messstellen 101a, 101b, 101c erfolgt. Die Algorithmen zum Berechnen der Zielmesswerte, insbesondere des Füllstands aus der Echokurve, liegen somit nicht mehr im Messgerät selbst, sondern werden zentral gewartet, betreut und ggf. aktualisiert.

Die Parametrierung der einzelnen Messstellen 101a, 101b, 101c kann z. B. über einen Webbrowser oder Internetbrowser erfolgen, mit welchem auf die Auswertevorrichtung 106 zugegriffen wird. Auf der Auswertevorrichtung 106 können auch unterschiedliche Profile eingerichtet werden mit unterschiedlichen Rechten für das ledigliche Abfragen von Messdaten als auch für das Parametrieren von Messgeräten.

In einem Ausführungsbeispiel weist das Messgerät 101a, 101b, 101c die Übertragungsvorrichtung 103a, 103b, 103c als integrierte Vorrichtung auf, so dass die Übertragungsvorrichtungen 103a, 103b, 103c in das Gehäuse des Messgeräts 101a, 101b, 101c eingebaut sind. In einem weiteren Ausführungsbeispiel kann eine bereits vorhandene Auswertevorrichtung auf einem Messgerät 101a, 101b, 101c durch die erfindungsgemäße Übertragungsvorrichtung 103a, 103b, 103c ersetzt werden, wodurch ältere Messgeräte einer älteren Messgerätegeneration für eine Server-basierte Auswertung umgerüstet werden können.

Beispielsweise kann die Übertragungsvorrichtung 103a, 103b, 103c so ausgestaltet sein, dass sie beim Anbringen an einem Messgerät eine interne Auswertevorrichtung auf dem Messgerät 101a, 101b, 101c ausschaltet. Dazu kann beispielsweise das Messgerät einen Schalter aufweisen, der beim Anschließen der Übertragungsvorrichtung an die Rohmessdatenschnittstelle die interne Auswertevorrichtung abschaltet. So kann der A/D-Wandler 116a, 116b, 116c mit der Rohdatenschnittstelle 104a, 104b, 104c direkt verbunden werden. Die Busbreite oder Bitbreite des A/D-Wandlers mag wegen der direkten Verbindung die Busbreite der Rohdatenschnittstellen 102a, 102b, 102c, 104a, 104b, 104c bestimmen.

Die Übertragungsvorrichtung 103a, 103b, 103c kann auch einen Schalter aufweisen, mit dem beispielsweise die Anzeige 114a, 114b eingeschaltet werden kann. Alternativ kann mittels dieses Schalters oder mittels eines zusätzlichen Schalters auch die Verschlüsselung eingeschaltet werden. In einer Weiterentwicklung kann gleichzeitig mit dem Einschalten der Anzeigeeinrichtung 114a, 114b ein Rückkanal einer bidirektionalen Verbindung 105a, 105b aufgebaut werden. Das Verschlüsseln der Daten kann mittels eines AES (Advanced Encryption Standard) Algorithmus oder jedem anderen Verschlüsselungsverfahren erfolgen, bevor die Übertragung über das Kommunikationsnetz 111 erfolgt. Zusätzlich oder alternativ könnte eine Komprimierung stattfinden, beispielsweise mittels eines ZIP Verfahrens.

Mittels des Kennzeichens für die Messgeräte 101a, 101b, 101c kann auch eine Identifizierung der Messgeräte erfolgen. So kann beispielsweise erkannt werden, ob ein Messgerät, das sich bei dem Server 106 anmelden möchte, registriert ist und für die Benutzung eines bestimmten Berechnungsalgorithmus freigeschaltet ist. Es können auch verschiedene Güteklassen für Messgeräte und Algorithmen vorgesehen sein. Beispielsweise kann die Nutzung eines besonders hochwertigen Algorithmus zur Füllstandmessung temporär freigeschaltet werden. Es mag auch eine Vergebührung für die Nutzung verschiedener Auswertealgorithmen einrichtbar sein, so dass möglicherweise auch eine Nutzung eines Messgeräts auf Leihbasis oder Stundenbasis möglich ist. Weiter kann ein Güteservice angeboten werden, bei dem beispielsweise für unterschiedliche Kategorien von Auswertalgorithmen unterschiedliche Vergebührungssätze vorgesehen sind. Weiterhin ist es denkbar, die graphische Aufbereitung unterschiedlich umzusetzen. Auch eine differenzierte Anaylse der berechneten Messwerte wäre damit möglich, um bei verschiedenen Anwendungen verschiedene Analyse-Arten zu nutzen. Beispielsweise kann eine Analyse der Vergangenheit erfolgen oder der Veränderungen zu gewissen Zeitpunkten. Auch die Freischaltung der Daten ist möglich, um diese über eine definierte externe Schnittstelle abzurufen, z.B. in Form eines Web-Services.

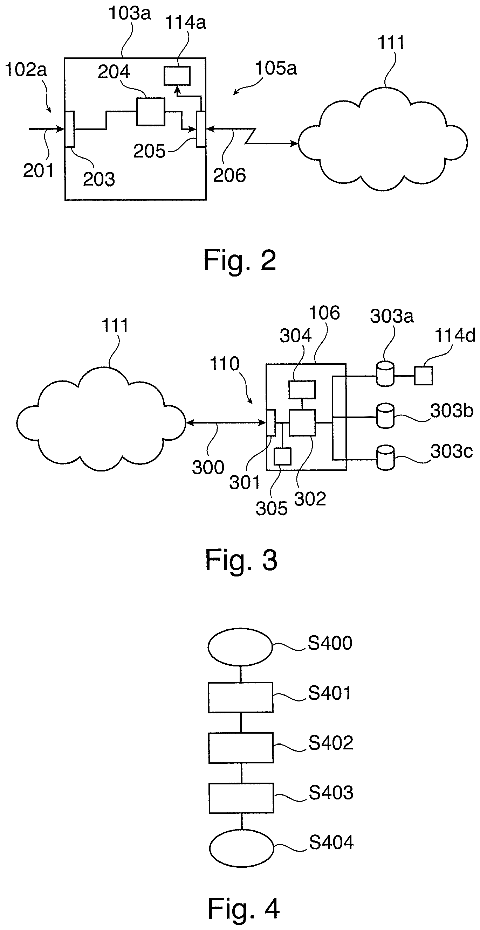

Fig. 2 zeigt eine Übertragungsvorrichtung 103a gemäß einem exemplarischen Ausführungsbeispiel der vorliegenden Erfindung. Die Übertragungsvorrichtung 103a ist auch repräsentativ für die Übertragungsvorrichtung 103b und 103c. Die Übertragungsvorrichtung 103a weist die Rohdatenschnittstelle 102a auf. Die Rohdatenschnittstelle 102a kann die Verbindungsleitung 201 vorsehen, die eine physikalische Rohdatenschnittstelle darstellt. Weiter weist die Datenschnittstelle 102a die Protokolleinheit 203 auf, welche das Entgegennehmen oder Abfragen der Rohdaten durchführt, aber auch für die logische Struktur innerhalb der Rohdaten sorgt. Die Rohdatenschnittstelle 203 gibt die empfangenen Rohdaten an die Kennzeicheneinrichtung 204 weiter, verändert aber die Rohdaten nicht und führt insbesondere keine Verarbeitung der Rohdaten und keine Zielmesswertberechnung durch. Die Protokolleinheit 203 und/oder die Kennzeicheneinrichtung 204 führt lediglich eine zusätzliche Kennzeichnung der Rohdaten durch, welche es einer entfernten Auswertevorrichtung 106 erlaubt, die Rohdaten der Übertragungsvorrichtung zuzuordnen. Ein solches Kennzeichen kann eine Internetprotokolladresse (IP-Adresse), eine MAC (Medium Access Control)-Adresse oder jede andere Form einer Kennzeichnung sein. Die Zuordnung kann über in der Übertragungsvorrichtung 103a, 103b, 103c hinterlegte Informationen erfolgen. Die Zuordnung kann mittels einer Kennzeichnung, die von der Kennzeichnungseinrichtung 204 festgelegt wird erfolgen. Die Kennzeichnung kann aus einer Gruppe von Kennzeichnungen ausgewählt werden, die aus den Kennzeichnungen Seriennummer, IMEI (International Mobile Equipment Identity), MAC-Addresse, Messstellen-ID, Kunden-ID, Gerätebetreiber-ID, ICCID (Integrated Circuit Card ID) besteht. Hierbei bezeichnet ID einen Kennwert oder einen Identifier.

Die gekennzeichneten unveränderten Daten werden dann an die Versendeeinrichtung 105a weitergereicht. Die Versendeeinrichtung 105a weist die Treibereinrichtung 205 auf, welche für eine logische Anpassung der zu übertragenden Daten an das Kommunikationsnetz 111 sorgt. Weiter weist die Versendeeinrichtung 105a die Netzwerkschnittstelle 206 auf, welche die physikalische Verbindung zu dem Kommunikationsnetz 111 herstellt. In dem Beispiel der Fig. 2 ist die Rohdatenschnittstelle 102a als unidirektionale Schnittstelle ausgeführt, d. h. als eine Leseschnittstelle für den Empfang von Rohdaten von einem in Fig. 2 nicht dargestellten Messgerät. Die Rohdatenschnittstelle 102a kann aber auch als bidirektionale Schnittstelle ausgeführt sein, beispielsweise um Anzeigedaten an ein in Fig. 2 nicht dargestelltes Messgerät zur Anzeige zu übertragen.

In Fig. 2 ist eine Anzeigeeinrichtung 114a in der Übertragungsvorrichtung integriert. Über die bidirektionale Netzwerkschnittstelle 105a können die Kennzeichen und Rohdaten auf eine in Fig. 2 nicht dargestellten Auswertevorrichtung übertragen werden. Es können auch Zielmesswerte von einem Server empfangen werden, die auf dem Server aus den Rohdaten ermittelt wurden. Diese zur Darstellung geeignete Zielmesswerte können von der Treibereinrichtung 205 an die Displayeinrichtung 114a zur Darstellung weitergeleitet werden.

Fig. 3 zeigt eine Auswertevorrichtung 106 gemäß einem exemplarischen Ausführungsbeispiel der vorliegenden Erfindung. Die Auswertevorrichtung 106 weist die Empfangseinrichtung 110 auf, welche zum Empfangen von mit einer Messgerätekennung gekennzeichneten Rohmessdaten eingerichtet ist. Die Empfangseinrichtung weist die Netzwerkschnittstelle 300 auf, welche eine physikalische Anbindung an ein Kommunikationsnetz 111 herstellen kann. Die Treibereinrichtung 301 sorgt für einen logischen Abschluss eines Netzwerkprotokolls, welches zwischen der Auswertevorrichtung 106 und dem Kommunikationsnetz 111 benutzt wird. Ferner ist an der Treibereinrichtung 301 die Verwaltungseinrichtung 305 angeschlossen, welche das Verwalten von zumindest einem entfernten Messgerät 101a, 101b, 101c ermöglicht. Mittels der Verwaltungseinrichtung 305 kann beispielsweise ein Parameter für eine Parametrierung eines Messgeräts gespeichert werden. Ferner weist die Auswertevorrichtung 106 die Zuordeneinrichtung 302 auf, welche dem Zuordnen von empfangenen Messdaten zu zumindest einem der verwalteten Messgeräte 101a, 101b, 101c dient. Beispielsweise kann die Zuordeneinrichtung 302 eine Zuordnung der empfangenen Rohmessdaten zum Abspeichern in unterschiedlichen Datenbanken 303a, 303b, 303c oder Datenspeichern 303a, 303b, 303c vornehmen, wobei jeweils ein Datenspeicher 303a, 303b, 303c mit einem der Messgeräte 101a, 101b, 101c assoziiert ist. Auf den Datenspeichern 303a, 303b, 303c können die Rohdaten der jeweiligen Echokurven zwischengespeichert werden. Auch können berechnete Zielmesswerte in diese Datenbanken 303a, 303b, 303c zurückgespeichert werden oder darin zwischengespeichert werden. So kann auch beispielsweise eine Anzeige der Zielmesswerte, wie beispielsweise der Füllstand eines der Messgeräte, auf einer Anzeigeeinrichtung 114d ermöglicht werden, welche in der Auswertevorrichtung 106 vorgesehen ist. Die Bereitstellung eines Zielmesswertes an ein Display 114a, 114b, 114c, 114d ist ein Beispiel für die Bereitstellung eines Zielmesswertes. Allgemein ist eine Bereitstelleinrichtung 114a, 114b, 114c, 114d eine Einrichtung, die der Ausgabe des ermittelten Zielmesswertes dient. Eine Bereitstelleinrichtung kann auch eine Übertragungseinrichtung aufweisen, über die der Zielmesswert auf ein Display übertragen wird.

Die Netzwerkschnittstelle 300, insbesondere die Empfangseinrichtung 110, kann bidirektional ausgestaltet sein, so dass die Daten nicht oder nur teilweise in den Datenbanken 303a, 303b, 303c gespeichert werden müssen, sondern beispielsweise an eine in Fig. 3 nicht dargestellte Leitstelle oder an ein Leitsystem 108c zur Anzeige weitergegeben werden können. Weiter können die Zielmesswerte auch an das jeweils zugeordnete Messgerät 101a, 101b, 101c zurückgespielt werden. Die Zielmesswerte können bereits ein Darstellungsformat aufweisen, das zur Darstellung geeignet ist. Zum Zurückspielen auf die Messgeräte oder Übertragungsvorrichtungen kann die Treibereinrichtung 301 auch zum Versenden von Zielmesswerten eingerichtet sein und entsprechende Zielmesswerte mit einer Messgerätekennung versehen.

Die Berechnungseinrichtung 304 oder der Prozessor 304 kann mittels Algorithmen aus den empfangenen Rohmessdaten jeweilige Zielmessdaten oder Zielmesswerte berechnen. Die Eingangsschnittstelle der Berechnungseinrichtung 304 kann als Rohdatenschnittstelle und die Ausgangsschnittstelle als Zielmesswertschnittstelle bezeichnet werden. In Abhängigkeit von dem Messgerät und dem eingestellten Algorithmus können in der Berechnungseinrichtung 304 individuell für jedes Messgerät 101a, 101b, 101c unterschiedliche Algorithmen eingesetzt werden. Über ein in Fig. 3 nicht dargestelltes Bedienterminal oder eine Bedienerschnittstelle kann ein Betreiber der Auswertevorrichtung 106 aber auch ein Nutzer der Auswerteeinrichtung 106 auf die Auswertevorrichtung 106 zugreifen und beispielsweise Parameter für die Messgeräte verändern, Parameter setzen (parametrieren) oder auch die zu verwendenden Algorithmen verändern oder entsprechende Messwerte auswerten. Es ist auch möglich einzustellen, an welchen Stellen oder an welchen Anzeigeeinrichtungen 114a, 114b, 114c, 114d die jeweiligen Messwerte oder Füllstände ausgegeben werden sollen.

Fig. 4 zeigt ein Flussdiagramm für ein Verfahren zum Übertragen von Rohmessdaten mittels einer Übertragungsvorrichtung 101a, 101b, 101c gemäß einem exemplarischen Ausführungsbeispiel der vorliegenden Erfindung. Das Verfahren startet in einem Ruhezustand S400. In dem Schritt S401 erfolgt ein Zugreifen mittels der Übertragungsvorrichtung auf Rohmessdaten eines Messgeräts 101a, 101b, 101c. Das Zugreifen erfolgt direkt, d. h. ohne einer weiteren Verarbeitung der Rohmessdaten nach der Digitalisierung durch einen Analog/Digitalwandler. Im Schritt S402 erfolgt ein Kennzeichnen der Rohmessdaten mit einer Messgerätekennung. Die Messgerätekennung kann beispielsweise eine Headerinformation oder eine IP-Adresse des jeweiligen Messgeräts 101a, 101b, 101c sein. Im Schritt S403 erfolgt sodann ein Versenden der gekennzeichneten Rohmessdaten an eine externe Auswertevorrichtung. Als Kennzeichen kann auch eine Quelladresse für ein erstelltes Datenpaket zur Messwertübertragung der Messdaten genutzt werden.

Das Versenden der Rohmessdaten erfolgt an ein externes Auswertegerät oder an eine externe Auswertevorrichtung 106, das/die von der Übertragungsvorrichtung zumindest durch ein Kommunikationsnetz 111 getrennt ist. Mittels der Messgerätekennung kann eine externe Auswertevorrichtung 106 die Rohmessdaten dem zugehörigen Messgerät 101a, 101b, 101c oder der Versendeeinrichtung 105a, 105b, 105c einer Übertragungsvorrichtung 103a, 103b, 103c zuordnen. Bei der Übertragung der Ausgabewerte oder Rohdaten eines Analog/Digitalwandlers 106a eines Messgeräts an die Auswertevorrichtung 106 mag im Wesentlichen keine Veränderung der Rohdaten erfolgen, so dass ein von einem Prozessor 204 auf der Auswertevorrichtung ausgeführter Algorithmus im Wesentlichen direkt auf die Rohmessdaten zurückgreifen kann, um einen Zielmesswert zu ermitteln, beispielsweise eine Füllstandhöhe. Ein Analog-/Digitalwandler digitalisiert zwar den Messwert, führt jedoch keine Einheitenkonvertierung, Kalibrierung, Linearisierung oder Skalierung durch. Die Einheitenkonvertierung ist in die Auswertevorrichtung ausgelagert. Das Verfahren endet im Schritt S404.

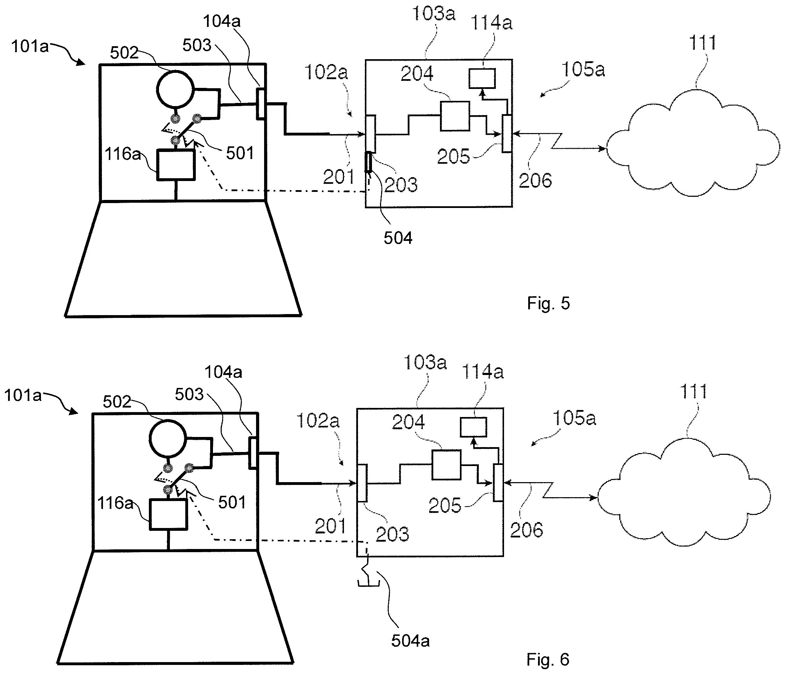

Fig. 5 zeigt ein Blockschaltbild einer Verbindung eines Messgeräts 101a mit einer Übertragungsvorrichtung 103a gemäß einem exemplarischen Ausführungsbeispiel der vorliegenden Erfindung. Die Rohdatenschnittstelle 104a des Messgeräts 101a ist mit der Rohdatenschnittstelle 102a der Übertragungsvorrichtung 103a verbunden. Das in Fig. 5 dargestellte Messgerät 101a ist ein Messgerät, das eine interne Auswertevorrichtung 502 aufweist. Bei der internen Auswertevorrichtung 502 kann es sich um einen eigenen für Berechnungen verantwortlichen integrierten Schaltkreis (IC), einen eigenen Prozessor, der die Berechnungen durchführt, oder um eine Sub-Routine eines Betriebssystemprogramms des Messgeräts 101a handeln. Die interne Auswertevorrichtung 502 mag zum Berechnen von Zielmesswerten aus den beispielsweise am A/D Wandler 116a empfangenen Rohdaten genutzt werden. Die interne Auswertevorrichtung 502 mag die Rohdaten weiterverarbeiten. Wie jedoch die in Fig. 5 dargestellte Situation des verbundenen Zustands zwischen Messgerät 101a und Übertragungsvorrichtung 103a zeigt, beeinflusst die Pinkodierung 504 der Übertragungsvorrichtung 103a die Überbrückungseinrichtung 501 derart, dass die Rohdaten, welche den A/D Wandler 116a verlassen direkt auf die Rohdatenschnittstelle 104a gelangen, ohne über die interne Auswertevorrichtung 502 zu gelangen. Die Busbreite des A/D-Wandlers mag wegen der direkten Verbindung mit der Busbreite der Rohdatenschnittstelle 102a, 104a übereinstimmen. Lediglich zusätzliche Leitungen, beispielsweise Steuerleitungen, die für eine Kommunikation zwischen Messgerät 101a und Übertragungsvorrichtung 103a genutzt werden, können zusätzlich vorhanden sein. Die Busbreite der Daten mag jedoch über die direkten Verbindungen konstant sein. Die Weiterverarbeitung der Rohdaten übernimmt eine in Fig. 5 nicht dargestellte externe Auswertevorrichtung, die beispielsweise an dem Netzwerk 111 angeschlossen ist. Die Rohdaten, ohne Steuerdaten oder Übertragungsdaten sehen an dem Ausgang des A/D Wandlers 116a im Wesentlichen genauso aus, wie an der externen Auswertevorrichtung.

Anstelle von oder ergänzend zu einer Pincodierung 504, kann eine Buchse/Steckverbindung zwischen den Rohdatenschnittstellen 104a, 102a vorgesehen sein, die die Überbrückungseinrichtung 501 steuert. Die Überbrückungseinrichtung 501 kann als ein Schalter, als ein elektronischer Schalter, als ein Y-Glied oder als ein Sprungbefehl realisiert sein. Die gestrichelte Linie zwischen Pincodierung 504 und Überbrückungseinrichtung 501 stellt den Signalfluss zur Steuerung der Überbrückung dar. Die Nutzung einer Überbrückungseinrichtung mag insbesondere bei der Nutzung von bestehnden Messgeräten angewandt werden. Die Überbrückungseinrichtung 501 kann auch vollständig auf der Übertragungsvorrichtung implementiert sein, so dass an einem im Feld vorhandenen Feldgerät 101a keine bauliche Veränderung vorgenommen werden muss, um es mit einer externen Auswertevorrichtung zu nutzen. Die Überbrückungseinrichtung 501, kann dann als Tastkontakt vorgesehen sein, der eine vorhandene interne Auswertevorrichtung kurzschließt.

Bei einem Messgerät, das ohne einer internen Auswertevorrichtung 502 aufgebaut ist, ist die Sensorschnittstelle oder die A/D Wandlerschnittstelle 116a direkt mit der Rohdatenschnittstelle 104a verbunden, so dass die von dem Sensor gelieferten Rohdaten direkt an die Rohdatenschnittstelle 104a weitergegeben werden. Beispielsweise mag die Rohdatenschnittstelle 104a die gleiche Bitbreite, wie der Sensorausgang oder der Ausgang des A/D Wandlers 116a aufweisen. Da auch zwischen den Rohdatenschnittstellen 104a, 102a keine Bearbeitung stattfindet mag sich auch hier die Bitbreite oder Busbreite nicht ändern.

Fig. 6 zeigt ein weiteres Blockschaltbild einer Verbindung eines Messgeräts 101a mit einer Übertragungsvorrichtung 103a gemäß einem exemplarischen Ausführungsbeispiel der vorliegenden Erfindung. In der in Fig. 6 dargestellten Übertragungsvorrichtung 103a ist ein Schalter 504a oder Taster 504a vorgesehen, der die Überbrückungseinrichtung 501 betätigt. Alternativ kann auch ein Magnet 504a vorgesehen sein, der einen magnetischen Schalter 501 auf dem Messgerät 101a betätigt, um die Überbrückung durchzuführen. Hierzu mag das Messgerät 101a eine Reed-Kontakt und/oder einen Hall-Sensor aufweisen. Als eine weitere Alternative, um mit einer Übertragungsvorrichtung 103a eine Überbrückungseinrichtung 501 zu betätigen, kann eine LED (Light-Emitting Diode) 504a vorgesehen sein, die einen Photosensor 501 schaltet.

In anderen Worten mag die Übertragungsvorrichtung 103a eine Überbrückungsvorrichtung 501, 504, 504a aufweisen, die eine interne Auswertevorrichtung 502 des Feldgeräts überbrückt, beispielsweise deren Eingang und Ausgang kurz schließt. Alternativ kann die Übertragungsvorrichtung einen Wahlschalter 504a aufweisen, welcher mit der gewünschten Funktion ausgestattet ist, beispielsweise ein Kippschalter, welcher auf die gewünschte Stellung, bzw.

Funktionalität vom Benutzer gestellt werden muss. Alternativ kann über eine mechanische Kodierung 504 an der Übertragungsvorrichtung 103a entsprechend das Überbrücken mittels Überbrückungseinrichtung 501 betätigt werden. Weiterhin ist diese Funktionalität auch über Zusatzinformationen im Übertragungsdatenstrom der Daten, die zwischen den Rohdatenschnittstellen 104a, 203 ausgetauscht werden, ein- und/oder ausschaltbar. Weiterhin ist es möglich über eine flexible, softwaremäßig umgesetzte, Ablaufsteuerung entsprechende Funktionen zu deaktivieren und die ausführende Recheneinheit länger in stromsparenden Standby-Modi zu betreiben. Ferner können auch Registereinträge oder Flags auf dem Messgerät 101a mittels der Übertragungsvorrichtung 103a beeinflusst werden, die das Überbrücken mittels Überbrückungseinrichtung 501 ein- und ausschalten. Das Signal zum Steuern der Überbrückungseinrichtung 501, das in Fig. 5 und Fig. 6 als gestrichelte Linie dargestellt ist, kann über den Datenstrom zwischen den Rohdatenschnittstellen 104a, 102a ausgetauscht werden. Für die Übertragung dieses Signals kann die Rohdatenschnittstelle 104a, 102a als bidirektionale Schnittstelle ausgeführt sein. Als ein Steuermechanismus für die Überbrückungseinrichtung 501 kann über ein von Hand zu betätigender Schalter 504a oder Taster 504a vorgesehen sein. Ferner kann die interne Auswertevorrichtung 502 vom Messgerät 101a abnehmbar ausgeführt sein und die Übertragungsvorrichtung 103a kann mechanisch an den Platz der internen Auswertevorrichtung 502 passen. Beide Module, interne Auswertevorrichtung 502 und Übertragungsvorrichtung 103a, können gegeneinander tauschbar ausgebildet sein. D.h. die Überbrückungsvorrichtung 103a mag als interne Auwertevorrichtung ausgebildet sein, zumindest die physikalischen Abmessungen der internen Auswertevorrichtung aufweisen. In einem Beispiel kann das Vorhandensein der Auswertevorrichtung 502 auch per Magnetfeld oder Licht an das Messgerät 101a übertragen werden, um zu signalisieren, dass eine interne Auswertevorrichtung 502 vorhanden ist. Für solch eine Signalisierung kann die interne Auswertevorrichtung 502 einen Magnet oder eine LED aufweisen und das Messgerät einen Magnetfeldsensor, Hallsensor und/oder Lichtsensor. Um den Austausch der internen Auswertevorrichtung gegen eine Übertragungsvorrichtung zu ermöglichen, mag die Übertragungsvorrichtung die gleichen Signalisierungseinrichtungen, wie die Auswertevorrichtung aufweisen, beispielsweise ein Magnet oder eine LED.

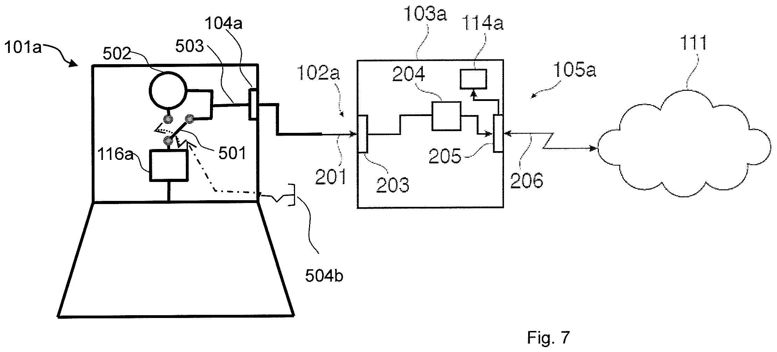

Fig. 7 zeigt ein weiteres Blockschaltbild einer Verbindung eines Messgeräts mit einer Übertragungsvorrichtung mit einem Schalter 504b an einem Messgerät gemäß einem exemplarischen Ausführungsbeispiel der vorliegenden Erfindung. Bei dem Schalter kann es sich um die bereits bei der Übertragungsvorrichtung 103a beschriebenen Ausführungsformen handeln, beispielsweise mechanisch, magnetisch oder optisch. Der Schalter 504b kann auch als Pincodierung, Stecker oder Buchse ausgebildet sein, die auf ein Einstecken einer Übertragungsvorrichtung 103a reagieren. Der Schalter 504b steuert die Überbrückungseinrichtung 501, so dass in einem eingesteckten Zustand der Übertragungsvorrichtung 103a in dem Messgerät 101a, die interne Auswertevorrichtung 502 überbrückt oder kurzgeschlossen ist. Ein Schalter 504b an dem Messgerät 103a kann beliebig mit einem Schalter 504a oder Pincodierung 504 der Übertragungsvorrichtung 103a kombiniert werden.

Ergänzend ist darauf hinzuweisen, dass die Begriffe "umfassend" und "aufweisend" keine anderen Elemente oder Schritte ausschließen und die Begriffe "eine" oder "ein" keine Vielzahl ausschließen. Ferner sei daraufhingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Verfahren zum Übertragen von Rohmessdaten mit einer Übertragungsvorrichtung (103a, 103b, 103c), das Verfahren aufweisend:
Zugreifen auf die Rohmessdaten eines Messgeräts (101a, 101b, 101c) mittels direktem Zugriff;
Kennzeichnen der Rohmessdaten mit einer Messgerätekennung;
Versenden der gekennzeichneten Rohmessdaten an eine externe Auswertevorrichtung (106);
wobei die externe Auswertevorrichtung(106) extern von dem Messgerät (101a, 101b, 101c) und/oder extern von der Versendeeinrichtung angeordnet ist;
wobei es die Messgerätekennung der externen Auswertevorrichtung (106) erlaubt, die Rohmessdaten dem Messgerät (101a, 101b, 101c) und/oder der Versendeeinrichtung zuzuordnen;
wobei die Rohmessdaten im Wesentlichen unverändert versendet werden Empfangen der Rohmessdaten von der Auswertevorrichtung und Bereitstellen eines berechneten Messwerts an eine Anzeigeeinrichtung (114a) der Übertragungsvorrichtung (103a).

2. Messsystem (100), aufweisend:
ein Messgerät (101a, 101b, 101c);
eine Übertragungsvorrichtung (103a, 103b, 103c) für das Messgerät, aufweisend:
eine Rohdatenschnittstelle (102a, 102b, 102c) zum direkten Zugriff auf Rohmessdaten des Messgeräts (101a, 101b, 101c);
Kennzeichnungseinrichtung (204) zum Kennzeichnen der Rohmessdaten mit einer Messgerätekennung;
eine Versendeeinrichtung (105a, 105b, 105c) zum Versenden der gekennzeichneten Rohmessdaten an eine externe Auswertevorrichtung (106);
wobei die externe Auswertevorrichtung (106) extern von dem Messgerät (101a, 101b, 101c) und/oder extern von der Versendeeinrichtung (105a, 105b, 105c) angeordnet ist;
wobei es die Messgerätekennung der externen Auswertevorrichtung erlaubt, die Rohmessdaten dem Messgerät (101a, 101b, 101c) und/oder der Übertragungsvorrichtung (103a, 103b, 103c) zuzuordnen;
wobei die Rohmessdaten im Wesentlichen unverändert versendet werden;
wobei die Übertragungsvorrichtung (103a, 103b, 103c) eingerichtet ist, einen berechneten Messwert von der Auswertevorrichtung (106) zu empfangen und einer Anzeigeeinrichtung (114a) oder einem Datenspeicher (303a) bereitzustellen; das Messsystem weiter aufweisend:
ein Kommunikationsnetzwerk (111);
eine Auswertevorrichtung (106) nach einem der Ansprüche 10 bis 12;
wobei das Messgerät (101a, 101b, 101c) über eine Rohdatenschnittstelle (102a, 102b, 102c) mit der Übertragungsvorrichtung (103a, 103b, 103c) derart verbunden ist, dass die Übertragungsvorrichtung (103a, 103b, 103c) direkt auf Rohmessdaten zugreifen kann, welche von dem Messgerät erzeugt werden;
wobei die Auswertevorrichtung (106) extern zu dem Messgerät (101a, 101b, 101c) und/oder extern zu der Übertragungsvorrichtung (103a, 103b, 103c) mit dem Kommunikationsnetzwerk verbunden ist;
wobei die Übertragungsvorrichtung (103a, 103b, 103c) mittels einer Versendeeinrichtung (105a, 105b, 105c) mit dem Kommunikationsnetzwerk (111) verbunden ist, so dass die Übertragungsvorrichtung die Rohmessdaten im Wesentlichen unverändert über das Kommunikationsnetzwerk an die Auswertevorrichtung versenden kann.

3. Messsystem nach Anspruch 2, wobei die Rohmessdaten die Messdaten einer Echokurve sind.

4. Messsystem nach Anspruch 2 oder 3, wobei die Rohdatenschnittstelle (102a, 102b, 102c) eine Messgeräteschnittstelle ist, ausgewählt aus der Gruppe von Messgeräteschnittstellen, bestehend aus:
einer I²C Schnittstelle;
einer HART® Schnittstelle; und
einer 4 ... 20 mA Schnittstelle.

5. Messsystem nach einem der Ansprüche 2 bis 4, wobei die Rohdatenschnittstelle (102a, 102b, 102c) zum Überbrücken einer in dem Messgerät (101a, 101b, 101c) vorhandenen Auswertevorrichtung eingerichtet ist.

6. Messsystem nach einem der Ansprüche 2 bis 5, wobei die Kennzeichnungseinrichtung (204) zum Verschlüsseln der Rohmessdaten eingerichtet ist.

7. Messsystem nach einem der Ansprüche 2 bis 6, wobei die Versendeeinrichtung (105a, 105b, 105c) eine Übertragungsschnittstelle aufweist, ausgewählt aus der Gruppe von Übertragungsschnittstelle, bestehend aus:
einer drahtgebundenen Übertragungsschnittstelle;
einer Funkschnittstelle; und
einer Weitverkehrsnetzschnittstelle.

8. Messsystem nach einem der Ansprüche 2 bis 7, wobei die Übertragungsvorrichtung (103a, 103b, 103c) in das Messgerät (101a, 101b, 101c) integrierbar ist.

9. Messsystem nach einem der Ansprüche 2 bis 8,
wobei die Rohdatenschnittstelle (102a, 102b, 102c) zum Überbrücken einer in dem Messgerät (101a, 101b, 101c) vorhandenen Auswertevorrichtung eingerichtet ist.

10. Eine Auswertevorrichtung (106) für ein Messsystem nach einem der Ansprüche 2 bis 9, aufweisend:
eine Empfangseinrichtung (110) zum Empfangen von mit einer Messgerätekennung gekennzeichneten Rohmessdaten von einer Übertragungsvorrichtung;
eine Verwaltungseinrichtung (305) zum Verwalten von zumindest einem Messgerät (101a, 101b, 101c);
eine Zuordeneinrichtung (302), zum Zuordnen der empfangenen Rohmessdaten zu einem des zumindest einem verwalteten Messgeräts (101a, 101b, 101c);
eine Berechnungseinrichtung (304), zum Berechnen eines Zielmesswerts aus den Rohmessdaten;
eine Bereitstelleinrichtung (114a, 114b, 114c, 114d), zum externen Bereitstellen des berechneten Zielmesswerts an der Übertragungsvorrichtung;
wobei die Berechnungseinrichtung zum Auswerten einer Echokurve eingerichtet ist.

11. Auswertevorrichtung (106) nach Anspruch 10, wobei der berechnete Messwert ein Füllstand, ein Druck und/oder ein Grenzstand ist.

12. Auswertevorrichtung (106) nach einem der Ansprüche 10 oder 11, wobei die Bereitstelleinrichtung (114a, 114b, 114c) zum internen und/oder externen Bereitstellen des berechneten Zielmesswerts eingerichtet ist.

13. Programmelement, zum Übertragen von Rohmessdaten, das, wenn es von einem Prozessor ausgeführt wird, das Verfahren nach Anspruch 1 ausführt.

## Claims

1. A method for transmitting raw measurement data with a transfer apparatus (103a, 103b, 103c), the method comprising:
accessing the raw measurement data of a measuring instrument (101a, 101b, 101c) by means of direct access;
labeling the raw measurement data with a measuring instrument label;
transmitting the labeled raw measurement data to an external evaluation apparatus (106);
wherein the external evaluation apparatus (106) is arranged externally from the measuring instrument (101a, 101b, 101c) and/or externally from the transmission apparatus;
wherein it allows the measuring instrument label of the external evaluation apparatus (106) to assign the raw measurement data to the measuring instrument (101a, 101b, 101c) and/or the transmission apparatus;
wherein the raw measurement data are transmitted substantially unchanged,
receiving the raw measurement data from the evaluation apparatus and providing a calculated measurement value to a display apparatus (114a) of the transfer apparatus (103a).

2. A measuring system (100), comprising:
a measuring instrument (101a, 101b, 101c);
a transfer apparatus (103a, 103b, 103c) for the measuring instrument, comprising:
a raw data interface (102a, 102b, 102c) for directly accessing raw measurement data of the measuring instrument (101a, 101b, 101c);
a labeling apparatus (204) for labeling the raw measurement data with a measuring instrument label;
a transmission apparatus (105a, 105b, 105c) for transmitting the labeled raw measurement data to an external evaluation apparatus (106);
wherein the external evaluation apparatus (106) is arranged externally from the measuring instrument (101a, 101b, 101c) and/or externally from the transmission apparatus (105a, 105b, 105c);
wherein it allows the measuring instrument label of the external evaluation apparatus to assign the raw measurement data to the measuring instrument (101a, 101b, 101c) and/or the transfer apparatus (103a, 103b, 103c);
wherein the raw measurement data are transmitted substantially unchanged;
wherein the transfer apparatus (103a, 103b, 103c) is configured to receive a calculated measurement value from the evaluation apparatus (106) and to provide it to a display apparatus (114a) or a data memory (303a); the measuring system further comprising:
a communication network (111);
an evaluation apparatus (106) according to any of claims 10 to 12;
wherein the measuring instrument (101a, 101b, 101c) is connected to the transfer apparatus (103a, 103b, 103c) via a raw data interface (102a, 102b, 102c) so that the transfer apparatus (103a, 103b, 103c) can directly access raw measurement data generated by the measuring instrument;
wherein the evaluation apparatus (106) is externally connected to the measuring instrument (101a, 101b, 101c) and/or externally to the transfer apparatus (103a, 103b, 103c) with the communication network;
wherein the transfer apparatus (103a, 103b, 103c) is connected to the communication network (111) by means of a transmission apparatus (105a, 105b, 105c) so that the transfer apparatus can transmit the raw measurement data substantially unchanged to the evaluation apparatus via the communication network.

3. Measuring system according to claim 2, wherein the raw measurement data are the measurement data of an echo curve.

4. Measuring system according to claim 2 or 3, wherein the raw data interface (102a, 102b, 102c) is a measuring instrument interface, selected from the group of measuring instrument interfaces consisting of:
an I²C interface;
a HART® interface; and
a 4 ... 20 mA interface.

5. Measuring system according to any of claims 2 to 4, wherein the raw data interface (102a, 102b, 102c) is configured to bridge an evaluation apparatus that is present in the measuring instrument (101a, 101b, 101c).

6. Measuring system according to any of claims 2 to 5, wherein the labeling apparatus (204) is configured to encrypt the raw measurement data.

7. Measuring system according to any of claims 2 to 6, wherein the transmission apparatus (105a, 105b, 105c) comprises a transfer interface, selected from the group of transfer interfaces consisting of:
a wired transfer interface;
a radio interface; and
a wide-area network interface.

8. Measuring system according to any of claims 2 to 7, wherein the transfer apparatus (103a, 103b, 103c) is integratable into the measuring instrument (101a, 101b, 101c).

9. Measuring system according to any of claims 2 to 8,
wherein the raw data interface (102a, 102b, 102c) is arranged to bridge an evaluation apparatus that is present in the measuring instrument (101a, 101b, 101c).

10. An evaluation apparatus (106) for a measuring system according to any of claims 2 to 9, comprising:
a receiving apparatus (110) for receiving raw measurement data, which are labeled with a measuring instrument label, by a transfer apparatus;
a management apparatus (305) for managing at least one measuring instrument (101a, 101b, 101c);
an assignment apparatus (302) for assigning the received raw measurement data to one of the at least one managed measuring instrument (101a, 101b, 101c);
a calculation apparatus (304) for calculating a target measurement value from the raw measurement data;
a provision apparatus (114a, 114b, 114c, 114d) for externally providing the calculated target measurement value to the transfer apparatus;
wherein the provision apparatus is configured to evaluate an echo curve.

11. Evaluation apparatus (106) according to claim 10, wherein the calculated measurement value is a fill level, a pressure and/or a limit.

12. Evaluation apparatus (106) according to any of claims 10 or 11, wherein the provision apparatus (114a, 114b, 114c) is configured to provide the calculated target measurement value internally and/or externally.

13. A program element for transferring raw measurement data which, when executed by a processor, executes the method according to claim 1.

## Revendications

1. Procédé de transmission de données de mesure brutes avec un dispositif de transmission (103a, 103b, 103c), le procédé comportant :
l'accès aux données de mesure brutes d'un appareil de mesure (101a, 101b, 101c) au moyen d'un accès direct ;
la caractérisation des données de mesure brutes avec un identificateur d'appareil de mesure ;
l'envoi des données de mesure brutes caractérisées à un dispositif de contrôle externe (106) ;
dans lequel le dispositif de contrôle externe (106) est agencé de manière externe à l'appareil de mesure (101a, 101b, 101c) et/ou de manière externe au moyen d'envoi ;
dans lequel l'identificateur d'appareil de mesure permet au dispositif de contrôle externe (106) d'ordonner les données de mesure brutes à l'appareil de mesure (101a, 101b, 101c) et/ou au moyen d'envoi ;
dans lequel les données de mesure brutes sont envoyées essentiellement inchangées
la réception des données de mesure brutes par le dispositif de contrôle externe et
la fourniture d'une valeur de mesure calculée à un dispositif d'affichage (114a) du dispositif de transmission (103a).

2. Système de mesure (100), comportant :
un appareil de mesure (101a, 101b, 101c) ;
un dispositif de transmission (103a, 103b, 103c) pour l'appareil de mesure, comportant :
une interface de données brutes (102a, 102b, 102c) pour l'accès direct aux données de mesure brutes de l'appareil de mesure (101a, 101b, 101c) ;
un moyen de caractérisation (204) pour la caractérisation des données de mesure brutes avec un identificateur d'appareil de mesure ;
un moyen d'envoi (105a, 105b, 105c) pour l'envoi des données de mesure brutes caractérisées à un dispositif de contrôle externe (106) ;
dans lequel le dispositif de contrôle externe (106) est agencé de manière externe à l'appareil de mesure (101a, 101b, 101c) et/ou de manière externe au moyen d'envoi (105a, 105b, 105c) ;
dans lequel l'identificateur d'appareil de mesure permet au dispositif de contrôle externe d'ordonner les données de mesure brutes à l'appareil de mesure (101a, 101b, 101c) et/ou au dispositif de transmission (103a, 103b, 103c) ;
dans lequel les données de mesure brutes sont envoyées essentiellement inchangées ;
dans lequel le dispositif de transmission (103a, 103b, 103c) est configuré pour recevoir une valeur de mesure calculée depuis le dispositif de contrôle externe (106) et pour la fournir à un dispositif d'affichage (114a) ou à un enregistreur de données (303a) ; le système de mesure comportant en outre :
un réseau de communication (111) ;
un dispositif de contrôle externe (106) selon l'une des revendications 10 à 12 ;
dans lequel l'appareil de mesure (101a, 101b, 101c) est raccordé au dispositif de transmission (103a, 103b, 103c) par le biais d'une interface de données brutes (102a, 102b,
102c) de telle sorte que le dispositif de transmission (103a, 103b, 103c) peut accéder directement aux données de mesure brutes qui sont obtenues par l'appareil de mesure ;
dans lequel le dispositif de contrôle (106) est raccordé au réseau de communication de manière externe à l'appareil de mesure (101a, 101b, 101c) et/ou de manière externe au dispositif de transmission (103a, 103b, 103c) ;
dans lequel le dispositif de transmission (103a, 103b, 103c) est raccordé au réseau de communication (111) par le biais d'un moyen d'envoi (105a, 105b, 105c) de telle sorte que le dispositif de transmission peut envoyer les données de mesure brutes essentiellement inchangées au dispositif de contrôle externe par le biais du réseau de communication.

3. Système de mesure selon la revendication 2, dans lequel les données de mesure brutes sont les données de mesure d'une courbe d'écho.

4. Système de mesure selon la revendication 2 ou 3, dans lequel l'interface de données brutes (102a, 102b, 102c) est une interface d'appareil de mesure, sélectionnée parmi le groupe d'interfaces d'appareil de mesure constitué par :
une interface I²C ;
une interface HART® ; et
une interface 4 ... 20 mA.

5. Système de mesure selon l'une des revendications 2 à 4, dans lequel l'interface de données brutes (102a, 102b, 102c) est configurée pour le pontage d'un dispositif de contrôle existant dans l'appareil de mesure (101a, 101b, 101c).

6. Système de mesure selon l'une des revendications 2 à 5, dans lequel le moyen de caractérisation (204) est configuré pour chiffrer les données de mesure brutes.

7. Système de mesure selon l'une des revendications 2 à 6, dans lequel le moyen d'envoi (105a, 105b, 105c) comporte une interface de transmission, sélectionnée parmi le groupe d'interfaces de transmission constitué par :
une interface de transmission filaire ;
une interface radio ; et
une interface de réseau étendu.

8. Système de mesure selon l'une des revendications 2 à 7, dans lequel l'interface de transmission (103a, 103b, 103c) peut être intégrée dans l'appareil de mesure (101a, 101b, 101c).

9. Système de mesure selon l'une des revendications 2 à 8, dans lequel l'interface de données brutes (102a, 102b, 102c) est configurée pour le pontage d'un dispositif de contrôle existant dans l'appareil de mesure (101a, 101b, 101c).

10. Un dispositif de contrôle externe (106) pour un système de mesure selon l'une des revendications 2 à 9 comportant :
un moyen de réception (110) pour recevoir depuis un dispositif de transmission des données de mesure brutes caractérisées avec un identificateur d'appareil de mesure ;
un moyen de gestion (305) pour gérer au moins un appareil de mesure (101a, 101b, 101c) ;
un moyen ordonnateur (302) pour ordonner les données de mesure brutes reçues à un des au moins un appareil de mesure (101a, 101b, 101c) géré ;
un moyen de calcul (304) pour calculer une valeur de mesure cible à partir des données de mesure brutes ;
un moyen fournisseur (114a, 114b, 114c, 114d) pour la fourniture externe de la valeur de mesure cible calculée au dispositif de transmission ;
dans lequel le moyen de calcul est configuré pour contrôler une courbe d'écho.

11. Dispositif de contrôle externe (106) selon la revendication 10, dans lequel la valeur de mesure calculée est un remplissage, une pression et/ou un niveau.

12. Dispositif de contrôle externe (106) selon l'une des revendications 10 ou 11, dans lequel le moyen fournisseur (114a, 114b, 114c) est configuré pour la fourniture interne et/ou externe de la valeur de mesure cible calculée.

13. Élément de programme pour la transmission de données de mesure brutes qui, lorsqu'il est exécuté par un processeur, exécute un procédé selon la revendication 1.
